# EUROPEAN PATENT APPLICATION

(11) **EP 4 836 035 A1**
(43) Date of publication of application: **04.11.2026**
(21) Application number: 24911940.5
(22) Date of filing: 17.10.2024
(51) Int. Cl.: H01M 8/0438, B60K 8/00, B60L 58/30, B60L 58/40, H01M 8/00, H01M 8/0432, H01M 8/04228, H01M 8/04303, H01M 8/04313, H01M 8/04537, H01M 8/04664, H01M 8/04694, H01M 8/04746, H01M 8/04858

(54) **WORK VEHICLE**

(30) Priority: 26.12.2023 JP 2023219231; 26.12.2023 JP 2023219043
(71) Applicant: KUBOTA CORPORATION, Osaka-shi, Osaka 530-0011 (JP)
(72) Inventor: KOSUGI, Shota, Sakai-shi, Osaka 590-0908 (JP)
(74) Representative: Cabinet Beau de Loménie
(86) International application number: PCT/JP2024/037039
(87) International publication number: WO 2025/142047

(57) **Abstract**

The work vehicle 1 according to the present disclosure includes: an FC module 24; a hydrogen tank 13 that stores hydrogen that is a fuel of the FC module 24; a motor 31 driven by electric power output from the FC module 24; and an FC system ECU 71 capable of acquiring a consumption command. In a case where the FC system ECU 71 acquires the consumption command, the FC module 24 generates power until a hydrogen amount in the hydrogen tank 13 becomes equal to or less than a predetermined amount.

## Description

### TECHNICAL FIELD

The present disclosure relates to a work vehicle.

### BACKGROUND ART

Patent Literature 1 discloses a vehicle including a motor, a fuel cell system using hydrogen as a fuel, and a hydrogen tank. The fuel cell system generates electric power by hydrogen supplied from the hydrogen tank, and makes the vehicle travel by driving the motor by the generated electric power.

The present application claims priority based on Japanese Patent Application No. 2023-219231 filed on December 26, 2023 and Japanese Patent Application No. 2023-219043 filed on December 26, 2023, the entire contents of which are incorporated herein by reference.

### CITATION LIST

### [PATENT LITERATURE]

PATENT LITERATURE 1: Japanese Laid-Open Patent Publication No. 2021-99945

### SUMMARY OF THE INVENTION

A work vehicle according to the present disclosure includes: a fuel cell; a hydrogen tank that stores hydrogen that is a fuel of the fuel cell; a motor driven by electric power output from the fuel cell; and a control device capable of acquiring a consumption command. In a case where the control device acquires the consumption command, the fuel cell generates power until a hydrogen amount in the hydrogen tank becomes equal to or less than a predetermined amount.

In addition, a work vehicle according to another aspect of the present disclosure includes: a fuel cell; a fuel tank that accommodates fuel to be supplied to the fuel cell; a detection device that detects a state of fuel discharged from the fuel tank; and a control device. The control device calculates a fuel discharge amount based on the state of fuel detected by the detection device and a fuel consumption amount consumed in the fuel cell.

### BRIEF DESCRIPTION OF DRAWINGS

[FIG. 1] FIG. 1 is a perspective view illustrating an example of an overall structure of a work vehicle.
[FIG. 2] FIG. 2 is a right side view of the work vehicle from which a part of an exterior component is removed.
[FIG. 3] FIG. 3 is a perspective view illustrating an example of an internal structure of the work vehicle.
[FIG. 4] FIG. 4 is a block diagram illustrating an example of an FC power generation system of the work vehicle.
[FIG. 5] FIG. 5 is a block diagram illustrating a configuration example of a control unit according to a first embodiment.
[FIG. 6] FIG. 6 is a flowchart indicating an example of consumption processing.
[FIG. 7] FIG. 7 is a block diagram illustrating a configuration example of a control unit according to a second embodiment.
[FIG. 8] FIG. 8 is a flowchart indicating an example of consumption processing at the time of execution of automatic driving.
[FIG. 9] FIG. 9 is a part of a flowchart indicating an example of consumption processing according to a modification example of the first embodiment.
[FIG. 10] FIG. 10 is a perspective view of a work vehicle.
[FIG. 11] FIG. 11 is a right side view of the work vehicle from which a part of an exterior component is removed.
[FIG. 12] FIG. 12 is a perspective view illustrating an example of an internal structure of the work vehicle.
[FIG. 13] FIG. 13 is a block diagram illustrating an example of a functional configuration of the work vehicle.
[FIG. 14] FIG. 14 is a graph for describing an abnormality determination method used for supply monitoring control of hydrogen.
[FIG. 15] FIG. 15 is a flowchart indicating an example of a procedure of abnormality determination by a control device.

### DETAILED DESCRIPTION

### <Chapter 1>

Next, preferred embodiments of the present disclosure in Chapter 1 will be described with reference to the accompanying drawings.

### [Problems to be solved by present disclosure]

The fuel cell system may be applied to a work vehicle used for farmwork.

The work vehicle is frequently used in a working period, but is rarely used in a period other than the working period, and may be maintained in a stopped state for a long period of time.

Here, when the working period ends and the work vehicle is stopped for a long period of time, hydrogen may remain in the hydrogen tank mounted on the work vehicle.

As described above, in a case where hydrogen remains in the hydrogen tank of the work vehicle stopped for a long period of time, handling of the remaining hydrogen may become a problem.

For this reason, a technique capable of appropriately treating hydrogen remaining in the hydrogen tank is desired.

### [Effects of present disclosure]

According to the present disclosure, hydrogen remaining in the hydrogen tank can be appropriately treated.

Hereinafter, contents of the embodiments will be listed and described.

### [Outline of embodiments]

(1) A work vehicle according to the present disclosure includes: a fuel cell; a hydrogen tank that stores hydrogen that is a fuel of the fuel cell; a motor driven by electric power output from the fuel cell; and a control device capable of acquiring a consumption command. In a case where the control device acquires the consumption command, the fuel cell generates power until a hydrogen amount in the hydrogen tank becomes equal to or less than a predetermined amount.

According to the above configuration, when the control device acquires the consumption command, the fuel cell starts power generation, and stops the power generation when the hydrogen amount in the hydrogen tank becomes equal to or less than the predetermined amount. Therefore, for example, at the time of making the work vehicle stopped for a long period of time, the hydrogen remaining in the hydrogen tank can be consumed until the hydrogen amount becomes equal to or less than the predetermined amount when the control device acquires a consumption command, and the hydrogen amount in the hydrogen tank of the work vehicle to be stopped for a long period of time can be reduced.

As a result, hydrogen remaining in the hydrogen tank can be appropriately treated.

(2) The work vehicle according to (1) may further include an operation unit that outputs the consumption command to the control device when receiving an operation input via an operation member.

In this case, it is possible to cause the fuel cell to consume hydrogen remaining in the hydrogen tank until the hydrogen becomes equal to or less than a predetermined amount by the operation input from the outside.

(3) The work vehicle according to (2) may further include: a position detection unit that detects a position of an own vehicle; and an output device that outputs, to an outside, that an operation input is to be performed to the operation member in a case where a position detected by the position detection unit is determined to be a position of a storage place of the own vehicle.

In this case, in a case where there is a possibility that the work vehicle is stopped in the storage place and stopped for a long period of time, it is possible to urge the occupant to treat hydrogen remaining in the hydrogen tank.

(4) In the work vehicle according to (2) or (3), processing of outputting the consumption command to the control device may be executed, by the operation unit, in a case where the hydrogen amount in the hydrogen tank is equal to or less than a threshold in addition to a reception of the operation input.

In this case, by appropriately setting a threshold, the output of the consumption command when a large amount of hydrogen remains in the hydrogen tank can be suppressed, and unnecessary consumption of hydrogen in the hydrogen tank can be suppressed.

(5) In addition, in the work vehicle according to (4), the predetermined amount may be a value in which the hydrogen amount is smaller than the threshold.

In this case, hydrogen is consumed by a difference between the threshold and the predetermined amount.

(6) The work vehicle according to any one of (1) to (5) may further include a plan processing unit that executes processing of outputting the consumption command to the control device in a case where contents of a work plan of an own vehicle indicate that the own vehicle is to be brought into a stop state for a certain period of time from a current time point.

In this case, in a case where it is clear that the work vehicle is to be brought into the stop state for a certain period of time, hydrogen remaining in the hydrogen tank is treated. Therefore, hydrogen remaining in the hydrogen tank can be appropriately treated without being operated by an occupant or the like of the work vehicle.

(7) In a case where the work vehicle according to any one of (1) to (6) further includes a power storage device that stores electric power generated by the fuel cell, the electric power generated by the fuel cell in a case where the consumption command is acquired may be stored in the power storage device.

In this case, the electric power obtained from hydrogen remaining in the hydrogen tank can be stored in the power storage device.

(8) In a case where the work vehicle according to (7) further includes an auxiliary power storage device, when the power storage device is fully charged, the electric power generated by the fuel cell may be stored in the auxiliary power storage device.

In this case, even when the power storage device is fully charged, the electric power obtained from hydrogen remaining in the hydrogen tank can be stored in the auxiliary power storage device.

(9) In addition, in a case where the work vehicle according to (7) further includes an external output unit that outputs the electric power generated by the fuel cell to an outside, when the power storage device is fully charged, the electric power generated by the fuel cell may be output to an external device connected to the external output unit.

In this case, even when the power storage device is fully charged, the electric power obtained from hydrogen remaining in the hydrogen tank can be consumed by the external device.

In addition, the present disclosure viewed from another viewpoint is a control device. This control device is used in a work vehicle including a fuel cell, a hydrogen tank that stores hydrogen that is a fuel of the fuel cell, and a motor driven by electric power output from the fuel cell. The control device includes a processing unit that executes, when receiving the consumption command, processing of causing the fuel cell to generate power until the hydrogen amount in the hydrogen tank becomes equal to or less than a predetermined amount.

### [Details of embodiments]

Hereinafter, preferred embodiments will be described with reference to the drawings.

Note that at least some of the embodiments described below may be arbitrarily combined.

### [Overall structure of work vehicle]

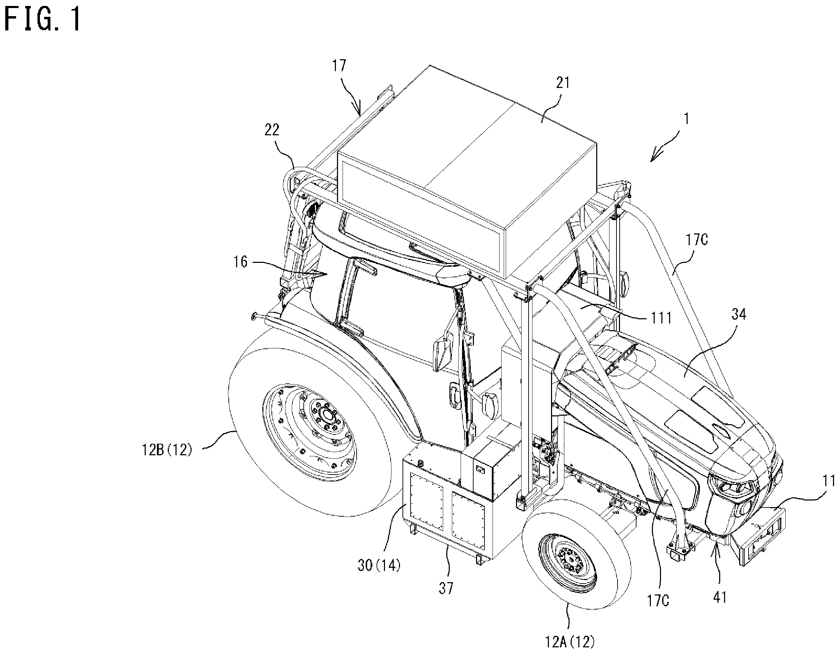

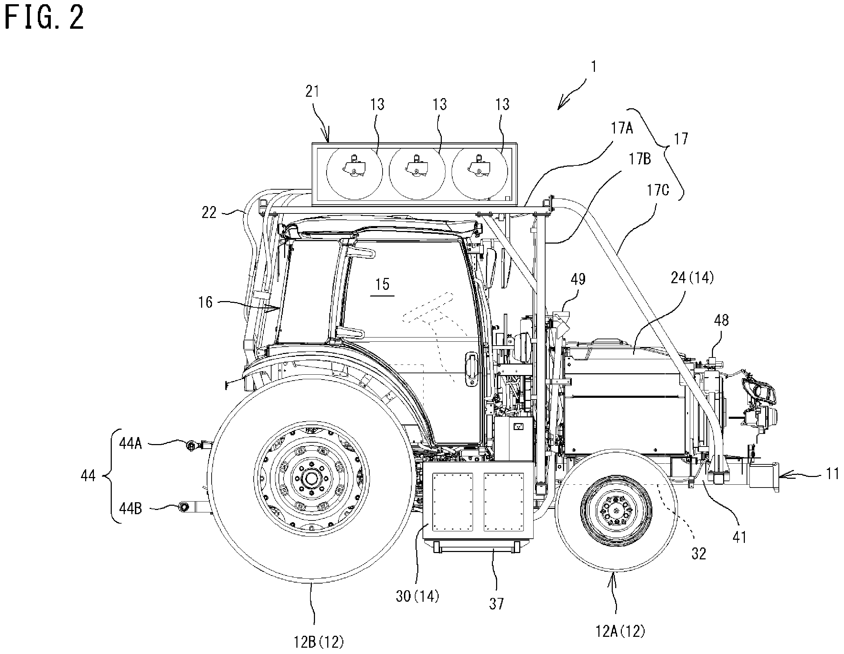

FIG. 1 is a perspective view illustrating an example of an overall structure of a work vehicle 1. FIG. 2 is a right side view of the work vehicle 1 from which a part of an exterior component (such as a hood 34 and a cover 111) is removed.

As illustrated in FIG. 1 and FIG. 2, the work vehicle 1 is a vehicle, specifically, a tractor, used for farmwork. However, the work vehicle 1 is not limited to the tractor, and may be a moving body such as an agricultural machine, a construction machine, or a utility vehicle.

The work vehicle 1 includes a vehicle body 11, a traveling device 12 that supports the vehicle body 11, a driver's seat 15, a cabin 16, and the like. The vehicle body 11 includes a chassis 41, the hood 34, the cover 111, the cabin 16, a fender for a rear wheel 12B, and the like.

More specifically, in the chassis 41 of the vehicle body 11, the hood 34, the cover 111, and the cabin 16 are disposed in order from a front portion toward a rear portion.

The work vehicle 1 further includes a tank unit 21 and a drive device 14. The tank unit 21 includes a plurality of hydrogen tanks 13 (see FIG. 2) for storing fuel therein. The drive device 14 outputs driving force by the fuel stored in the tank unit 21.

The fuel is liquid or gas, and is hydrogen, methane, carbon monoxide (CO), or the like. The fuel of the present embodiment is hydrogen. Each of the plurality of tanks 13 stores hydrogen gas.

The work vehicle 1 is a fuel cell vehicle (FCV). The work vehicle 1 includes a fuel cell power generation system (FC power generation system). The work vehicle 1 travels using electric power generated by the FC power generation system as an energy source.

Note that the FC power generation system of the present embodiment generates electric power by hydrogen. The FC power generation system may generate electric power by methane or carbon monoxide (CO).

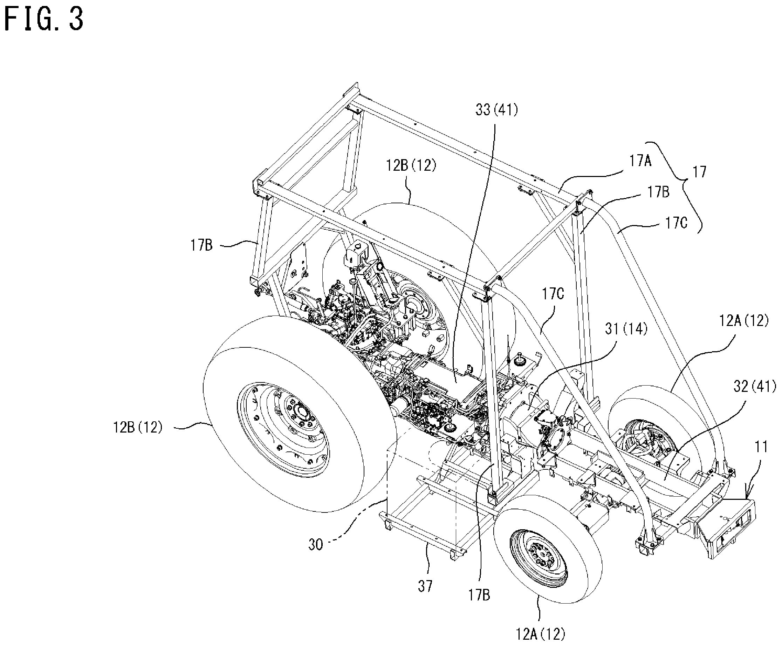

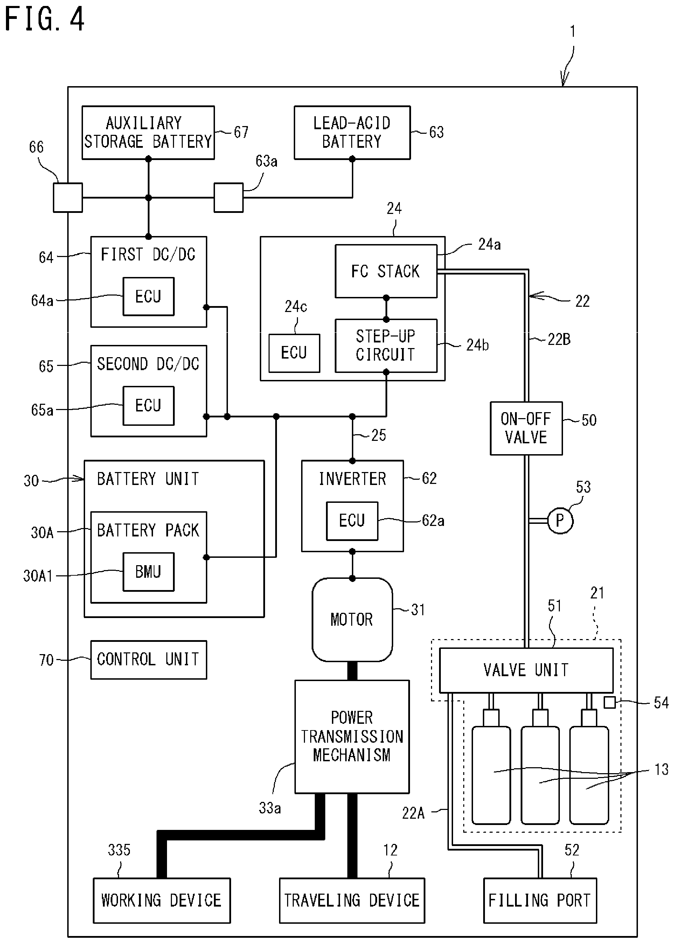

The drive device 14 includes a fuel cell module (FC module) 24, a battery unit 30, and an electric motor 31(see FIG. 3: hereinafter, also referred to as "motor 31"). The battery unit 30 incorporates a battery pack 30A (see FIG. 4). The battery unit 30 stores the electric power output from the FC module 24.

The work vehicle 1 includes a pipe 22 of hydrogen gas. The hydrogen gas is filled into each hydrogen tank 13 from a filling port 52 (see FIG. 4) provided at an end portion of the pipe 22. Hydrogen in the hydrogen tank 13 is supplied to the FC module 24 through the pipe 22.

The cabin 16 is a partitioned cab. The cabin 16 includes front pillars, rear pillars, and a roof. The front pillars are disposed on the left and right on the front side of the driver's seat 15, and the rear pillars are disposed on the left and right on the rear side of the driver's seat 15.

The work vehicle 1 may include a canopy or a rollover protective structure (ROPS) instead of the cabin 16. In a case where the work vehicle 1 does not include the cabin 16, the tank unit 21 is disposed above the driver's seat 15 by an installation frame 17 to be described later.

The traveling device 12 includes front wheels 12A and rear wheels 12B. These components are disposed symmetrically with respect to the vehicle body 11. One or both of the front wheels 12A and the rear wheels 12B are rotated by the power of the motor 31.

One or both of the front wheels 12A and the rear wheels 12B (drive wheels) rotated by the power of the motor 31 may be crawlers (caterpillars).

As illustrated in FIG. 2, a first radiator 48, the FC module 24, and a second radiator 49 are mounted on a portion of the chassis 41 corresponding to the front wheels 12A in order from the front side toward the rear side. The first radiator 48 and the FC module 24 are covered with the hood 34. The second radiator 49 is covered with the cover 111.

As illustrated in FIG. 1, an upper surface of the cover 111 is higher than the uppermost end of the hood 34 but lower than the uppermost end of a steering wheel of the driver's seat 15.

In addition, a rear end portion of the hood 34 is located lower than the cover 111, and an upper surface of the hood 34 is formed in a tapered shape gradually decreasing from a rear end portion toward a front end portion. Therefore, the front view from a worker sitting on the driver's seat 15 is less likely to be obstructed.

### [Internal structure of work vehicle]

FIG. 3 is a perspective view illustrating an example of an internal structure of the work vehicle 1.

As illustrated in FIG. 3, the chassis 41 constituting the vehicle body 11 includes a front frame 32 and a transmission case 33.

The front frame 32 is made of a steel frame having a shape elongated in the front-rear direction. The transmission case 33 is coupled to a rear portion of the front frame 32. A framework of the vehicle body 11 is formed by the transmission case 33 and the front frame 32.

The installation frame 17 is connected to the chassis 41. The installation frame 17 is a frame for disposing the tank unit 21 above the cabin 16.

The installation frame 17 includes a ceiling frame 17A, a plurality of pillars 17B, and a pair of left and right reinforcing frames 17C. The ceiling frame 17A has a substantially rectangular shape in which the front-rear direction is longer than the left-right direction. The plurality of pillars 17B supports the ceiling frame 17A from below. The pair of reinforcing frames 17C is provided on the left and right of a front end portion of the ceiling frame 17A.

The tank unit 21 is coupled to the ceiling frame 17A in a horizontal state. As illustrated in FIG. 2, the ceiling frame 17A is located higher than the roof of the cabin 16. Thus, the tank unit 21 is disposed above the roof of the cabin 16.

The reinforcing frames 17C are reinforcing swash members inclined downward from the front end portion of the ceiling frame 17A to the front frame 32. Therefore, the rigidity of the installation frame 17 in the front-rear direction is enhanced as compared with the case where the ceiling frame 17A and the tank unit 21 are supported only by the pillars 17B.

A support frame 37 for causing the vehicle body 11 to support the battery unit 30 is coupled to the chassis 41 of the work vehicle 1.

Specifically, the motor 31 is mounted on the front frame 32 of the chassis 41, and the support frame 37 is attached to a portion of the front frame 32 corresponding to the motor 31. The support frame 37 is made of, for example, a metal frame member, and is attached in a cantilevered state so as to protrude rightward from the front frame 32.

The transmission case 33 located behind the motor 31 has a power transmission mechanism therein. The power transmission mechanism includes a transmission, a clutch, and a differential gear, and decelerates or accelerates the rotation of an output shaft of the motor 31 to transmit the rotation to the traveling device 12.

In addition, the power transmission mechanism includes a branch mechanism that outputs a portion of the power of the motor 31 to a PTO shaft 334 (see FIG. 4). The PTO shaft 334 is an output shaft protruding rearward from the transmission case 33.

A coupling device 44 (see FIG. 2) configured by, for example, a three-point link mechanism for coupling a working device 335 (see FIG. 4) for performing desired farmwork to the rear of the vehicle body 11 is attached to the transmission case 33.

The three-point link mechanism can include, for example, an upper arm 44A protruding rearward from the transmission case 33 and a pair of left and right lower arms 44B. The working device 335 is, for example, a cultivator, a baler, or the like.

The rotational movement of the PTO shaft 334 is transmitted to an input shaft of the working device 335 coupled to the coupling device 44, for example, during driving of the traveling device 12. Therefore, the work vehicle 1 can drive the working device 335 by the power of the motor 31 while traveling in a field or the like.

### [Power generation system of work vehicle]

FIG. 4 is a block diagram illustrating an example of the FC power generation system of the work vehicle 1. In FIG. 4, in addition to the FC power generation system, the motor 31 driven by electric power generated by the FC power generation system, the traveling device 12, and the working device 335 are also illustrated.

The FC power generation system includes the tank unit 21, a first DC/DC converter 64, a second DC/DC converter 65, and the like in addition to the FC module 24 and the battery unit 30 included in the drive device 14.

As illustrated in FIG. 4, the FC module 24 includes a fuel cell stack 24a, a step-up circuit 24b, and an ECU 24c.

The fuel cell stack (FC stack) 24a has a stacked structure in which a plurality of fuel cells (single cells) is stacked. The plurality of single cells is connected in series so as to obtain a desired voltage. Hydrogen as fuel and air (oxygen) are supplied to the FC stack 24a. The FC module 24 includes a compressor and a pump (not illustrated) for supplying hydrogen and air to the FC stack 24a. The FC stack 24a outputs (generates) electric power by an electrochemical reaction generated by hydrogen and air.

Hydrogen supplied to the FC stack 24a is provided through the pipe 22 as described above.

As illustrated in FIG. 4, the pipe 22 connects the FC stack 24a and the tank unit 21.

The pipe 22 includes a pipe portion 22A and a pipe portion 22B.

The pipe portion 22A is a gas pipe connecting the filling port 52 and the tank unit 21. The pipe portion 22A guides hydrogen introduced into the filling port 52 to the tank unit 21.

The pipe portion 22B is a gas pipe connecting the FC stack 24a and the tank unit 21. The pipe portion 22B guides hydrogen stored in the tank unit 21 to the FC stack 24a.

The pipe portion 22B is provided with a pressure sensor 53 for obtaining the hydrogen amount of the tank unit 21.

In addition, the pipe portion 22B is provided with an on-off valve 50. The on-off valve 50 is provided between the pressure sensor 53 and the FC stack 24a. When the on-off valve 50 is opened, hydrogen is supplied to the FC module 24. When the on-off valve 50 is closed, the supply of hydrogen to the FC module 24 is stopped.

The tank unit 21 includes a valve unit 51 in addition to the plurality of hydrogen tanks 13. The plurality of hydrogen tanks 13 is connected to the valve unit 51. The valve unit 51 has a function of distributing hydrogen introduced from the filling port 52 into the plurality of hydrogen tanks 13, and a function of collecting hydrogen from the plurality of hydrogen tanks 13, adjusting the flow rate to a predetermined flow rate, and supplying hydrogen to the FC stack 24a.

The tank unit 21 includes a temperature sensor 54. The temperature sensor 54 measures the temperature in the tank unit 21 as the temperature of hydrogen.

The electric power generated by the FC stack 24a is supplied to the step-up circuit 24b.

The step-up circuit 24b steps up the supplied electric power to a predetermined voltage. The FC module 24 outputs the electric power stepped up by the step-up circuit 24b to the subsequent stage.

The ECU 24c has a function of controlling each unit of the FC module 24.

An electric path 25 is connected to an output end of the step-up circuit 24b.

The battery unit 30, the first DC/DC converter 64, and the second DC/DC converter 65 are connected to the step-up circuit 24b through the electric path 25.

The electric power output from the step-up circuit 24b is supplied to each unit through the electric path 25.

As described above, the battery unit 30 includes the battery pack 30A.

The battery pack 30A is a power storage device that stores electric power generated by the FC module 24. The battery pack 30A discharges the stored electric power. The electric power discharged from the battery pack 30A is supplied to the inverter 62, the first DC/DC converter 64, and the second DC/DC converter 65 through the electric path 25.

The battery pack 30A includes a battery management unit (BMU) 30A1 in addition to a battery main body including a plurality of secondary battery cells. The battery main body included in the battery pack 30A is, for example, a lithium ion battery. The rated voltage of the battery main body (battery pack 30A) is several 100 V.

The BMU 30A1 has a function of monitoring and protecting the battery main body. In addition, the BMU 30A1 has a function of performing charge/discharge control of the battery main body and measuring a charge amount (for example, SOC).

In addition, the inverter 62 is connected to the electric path 25. The inverter 62 has a function of supplying electric power generated by the FC power generation system to the motor 31 and controlling a rotation output of the motor 31.

The inverter 62 has a function of converting DC power supplied from the FC module 24 or the battery unit 30 into three-phase AC power. The AC power output from the inverter 62 is supplied to the motor 31. The inverter 62 controls the rotation output of the motor according to a control command or the like given from a control unit 70 to be described later.

The inverter 62 includes an ECU 62a. The ECU 62a has a function of controlling a circuit included in the inverter 62 based on the control command or the like.

The motor 31 outputs a rotational force by the AC power supplied from the inverter 62. The rotational force output from the motor 31 is supplied to a power transmission mechanism 33a in the transmission case 33.

The power transmission mechanism 33a outputs all or part of the rotational force of the motor 31 to the traveling device 12. In addition, in a case where the working device 335 is operated, the power transmission mechanism 33a outputs a part of the rotational force of the motor 31 to the working device 335.

The first DC/DC converter 64 steps down the voltage of the DC power output from the FC module 24 or the battery unit 30 to a first voltage (for example, 12 volts). In addition to a lead-acid battery 63, an auxiliary storage battery 67, and an external output unit 66, electrical components such as a lamp of the work vehicle 1 and auxiliary equipment are connected to an output end of the first DC/DC converter 64. The electric power output from the first DC/DC converter 64 is supplied to these devices.

The first DC/DC converter 64 includes an ECU 64a. The ECU 64a has a function of controlling a circuit included in the first DC/DC converter 64 based on a command or the like from the control unit.

The lead-acid battery 63 stores the electric power output from the first DC/DC converter 64. The electric power stored in the lead-acid battery 63 is supplied to the electrical components and auxiliary equipment.

An open/close switch 63a is provided between the lead-acid battery 63 and the first DC/DC converter 64. The open/close switch 63a has a function of opening and closing between the lead-acid battery 63 and the first DC/DC converter 64.

The external output unit 66 is an interface for outputting the electric power from the first DC/DC converter 64 to a device outside the work vehicle 1. When the external device is connected to the external output unit 66, the electric power from the first DC/DC converter 64 is supplied to the connected external device.

The auxiliary storage battery 67 includes a secondary battery such as a lead storage battery or a lithium ion battery. Similarly to the lead-acid battery 63, the auxiliary storage battery 67 stores the electric power output from the first DC/DC converter 64. The auxiliary storage battery 67 is an auxiliary power storage device that supplementarily stores electric power generated by the FC module 24.

The second DC/DC converter 65 steps down the voltage of the DC power output from the FC module 24 or the battery unit 30 to a second voltage (for example, 24 volts). Similarly to the first DC/DC converter 64, electrical components and auxiliary equipment of the work vehicle 1 are connected to an output end of the second DC/DC converter 65. The electric power output from the second DC/DC converter 65 is supplied to these devices.

The second DC/DC converter 65 includes an ECU 65a. The ECU 65a has a function of controlling a circuit included in the second DC/DC converter 65 based on a command or the like from the control unit.

As illustrated in FIG. 4, the work vehicle 1 further includes the control unit 70.

The control unit 70 has a function of controlling the FC power generation system including the FC module 24, receiving an operation input from an occupant, and controlling the entire work vehicle 1 based on the received operation input.

In FIG. 4, electronic control units such as the ECU 24c, the ECU 62a, the ECU 64a, the ECU 65a, and the BMU 30A1 include, for example, a processor, a storage device, and an input/output interface. In addition, these electronic control units are connected to each other by, for example, a controller area network (CAN), and can communicate with each other. In addition, the control unit 70 is also connected to the CAN.

Devices such as the on-off valve 50, the pressure sensor 53, the temperature sensor 54, and the open/close switch 63a are also connected to the CAN. Therefore, the control unit 70 can send control commands to these devices through the CAN, and receive outputs provided from these devices.

The control unit 70 has a function of executing consumption processing of forcibly consuming hydrogen remaining in the tank unit 21.

### [Control unit 70 according to first embodiment]

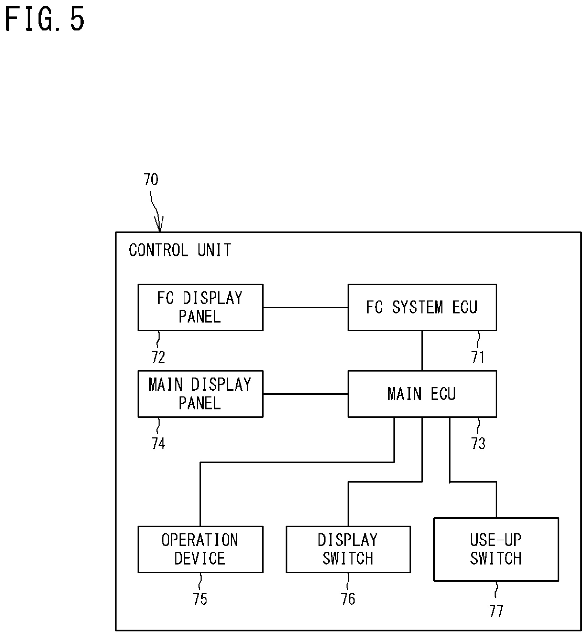

FIG. 5 is a block diagram illustrating a configuration example of the control unit 70 according to a first embodiment.

The control unit 70 includes an FC system ECU 71, an FC display panel 72, a main ECU 73, a main display panel 74, an operation device 75, a display switch 76, and a use-up switch 77.

The FC system ECU 71 and the main ECU 73 are connected to the CAN. Therefore, the FC system ECU 71 and the main ECU 73 can mutually communicate with the electronic control unit and various devices illustrated in FIG. 4.

The FC system ECU 71 and the main ECU 73 include, for example, the processor (processing unit), the storage device, and the input/output interface. The processor includes a central processing unit (CPU), a graphics processing unit (GPU), a digital signal processor (DSP), a field programmable gate array (FPGA), and the like.

The storage device includes, for example, a flash memory, a hard disk, a read only memory (ROM), a random access memory (RAM), and the like.

The storage device stores a computer program to be executed by the processor and necessary information. The processor realizes various processing functions of the processor by executing a computer program stored in a computer-readable non-transitory recording medium such as the storage device.

The FC system ECU 71 has a function of controlling the FC power generation system including the FC module 24.

In addition, the FC system ECU 71 has a function as a control device that causes the FC module 24 to generate power until the hydrogen amount in the tank unit 21 becomes equal to or less than a lower limit amount (predetermined amount) LA when acquiring a consumption command. The consumption command is a command for causing the FC module 24 to generate power until the hydrogen amount in the tank unit 21 becomes equal to or less than the lower limit amount LA.

Furthermore, the FC system ECU 71 also has a function of calculating electric power (generatable electric power) that can be generated by the FC module 24 in a case where hydrogen is used until the hydrogen amount in the tank unit 21 becomes equal to or less than the lower limit amount LA from the current amount.

Note that the lower limit amount LA is an amount by which it can be determined that hydrogen in the tank unit 21 is almost used up, and is an amount by which it can be determined that the tank unit 21 is almost empty.

The FC system ECU 71 obtains the generatable electric power based on the output of the pressure sensor 53 and the output of the temperature sensor 54. The FC system ECU 71 stores a database in which the output of the pressure sensor 53 (or the hydrogen amount in the tank unit 21), the output of the temperature sensor 54 (or the temperature), and the generatable electric power are associated with each other. When acquiring the output of the pressure sensor 53 and the output of the temperature sensor 54, the FC system ECU 71 refers to the database to obtain the generatable electric power.

The FC system ECU 71 may obtain the generatable electric power using the output of the pressure sensor 53, or may obtain the generatable electric power using the hydrogen amount in the tank unit 21 obtained from the output of the pressure sensor 53.

The FC system ECU 71 may constantly obtain the generatable electric power, or may obtain the generatable electric power when it is necessary to output the generatable electric power.

The FC display panel 72 is connected to the FC system ECU 71. The FC display panel 72 displays and outputs various types of information indicating an operation state of the FC power generation system. The FC display panel 72 also has a function as an output device that outputs generatable electric power. The FC display panel 72 can output the generatable electric power by displaying a numerical value on the panel, or can output the generatable electric power by notifying by voice. The FC display panel 72 is provided in the driver's seat 15. Therefore, the FC display panel 72 outputs the generatable electric power to the occupant.

The operation device 75 includes an operation member for adjusting the output of the work vehicle 1, such as an accelerator pedal or an accelerator lever.

The display switch 76 and the use-up switch 77 are provided in the driver's seat 15. Therefore, the display switch 76 and the use-up switch 77 are switches that receive an operation input by the occupant.

The operation device 75, the display switch 76, and the use-up switch 77 are connected to the main ECU 73.

The main ECU73 has a function of controlling each unit of the work vehicle 1 according to the operation input by an occupant. The control performed by the main ECU 73 includes control related to the working device 335 in addition to control related to the movement of the work vehicle 1.

The main ECU 73 generates a control command to be given to the inverter 62 based on the operation input received by the operation device 75. The inverter 62 controls the motor 31 according to the control command.

In addition, the main ECU 73 has a function of giving a command to the FC system ECU 71 to cause the FC display panel 72 to output the generatable electric power when receiving the operation input via the display switch 76. That is, the display switch 76 (first operation member) and the main ECU 73 constitute an operation unit that causes the FC display panel 72 to output the generatable electric power.

Furthermore, the main ECU 73 also has a function of outputting the consumption command to the FC system ECU 71 when receiving the operation input via the use-up switch 77. That is, the use-up switch 77 (second operation member) and the main ECU 73 constitute an operation unit that outputs the consumption command to the FC system ECU71 (control device).

The main display panel 74 is connected to the main ECU 73. The main display panel 74 displays and outputs various types of information indicating the state of each unit of the work vehicle 1. The main display panel 74 is provided in the driver's seat 15. Therefore, the main display panel 74 outputs to the occupant.

### [Consumption processing]

The consumption processing is executed by cooperation between the FC system ECU 71 and the main ECU 73 included in the control unit 70.

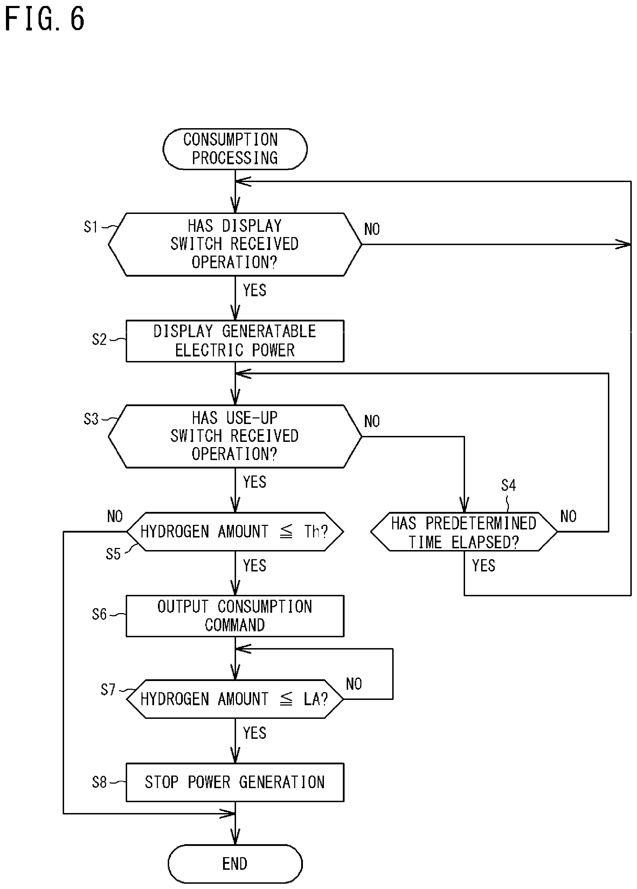

FIG. 6 is a flowchart indicating an example of the consumption processing.

In FIG. 6, first, the main ECU 73 determines whether the operation input is received by the display switch 76 (step S1).

The main ECU 73 repeats step S1 until determining that the operation input is received by the display switch 76.

When determining that the operation input is received by the display switch 76, the main ECU 73 gives a display command to the FC system ECU 71. The FC system ECU 71 to which the display command is given displays and outputs the current generatable electric power on the FC display panel 72 (step S2).

Note that the main ECU 73 restricts the reception of the operation input by the use-up switch 77 until the current generatable electric power is displayed and output.

When the generatable electric power is displayed and output, the main ECU 73 then determines whether the operation input is received by the use-up switch 77 (step S3).

When determining that the operation input is not received by the use-up switch 77, the main ECU 73 determines whether a predetermined time has elapsed since the generatable electric power has been output (step S4).

When determining that the predetermined time has not elapsed, the main ECU 73 returns to step S3 and repeats the processing.

When determining that the predetermined time has elapsed, the main ECU 73 returns to step S1. In this case, the main ECU 73 waits for the reception of the operation input by the display switch 76 again without performing the processing after step S3 (step S1).

As a result, after the generatable electric power is output, hydrogen in the tank unit 21 is consumed, and it is possible to suppress an increase in the difference between the displayed generatable electric power and the actual generatable electric power.

When determining in step S3 that the operation input is received by the use-up switch 77, the main ECU 73 determines whether the hydrogen amount in the tank unit 21 is equal to or less than a threshold Th (step S5). As described above, the hydrogen amount in the tank unit 21 is obtained based on the output of the pressure sensor 53.

Here, the threshold Th is set to a value larger than the lower limit amount LA, and the generatable electric power is smaller than the hydrogen amount according to the storable electric power of the battery unit 30. As a result, when the FC module 24 is caused to generate power until the hydrogen amount in the tank unit 21 becomes equal to or less than the lower limit amount LA by the subsequent processing, the generated electric power can be stored in the battery unit 30.

When determining in step S5 that the hydrogen amount in the tank unit 21 is not equal to or less than the threshold Th, the main ECU 73 ends the processing. In this case, the hydrogen amount in the tank unit 21 is not small. Therefore, the main ECU 73 stops the consumption processing which is the processing of forcibly consuming hydrogen. This is because hydrogen in the tank unit 21 may be wastefully consumed.

On the other hand, when determining in step S5 that the hydrogen amount in the tank unit 21 is equal to or less than the threshold Th, the main ECU 73 outputs the consumption command to the FC system ECU 71 (step S6).

As a result, the FC system ECU 71 acquires the consumption command and causes the FC module 24 to start power generation.

The FC module 24 generates power using hydrogen remaining in the tank unit 21.

While the FC module 24 performs power generation, the FC system ECU 71 monitors and controls each unit of the FC power generation system.

The FC system ECU 71 refers to the charge amount (SOC) of the battery pack 30A by the BMU 30A1 and determines whether the battery pack 30A can be charged with the generated electric power.

When determining that the battery pack 30A can be charged, the FC system ECU 71 causes the battery pack 30A to store the electric power generated by the FC module 24.

When the battery pack 30A is fully charged, the FC system ECU 71 operates the first DC/DC converter 64 to convert the electric power generated by the FC module 24 into the first voltage, and causes the lead-acid battery 63 and the auxiliary storage battery 67 to store the electric power.

As described above, in the present embodiment, even when the battery pack 30A is fully charged, the electric power obtained from the hydrogen remaining in the tank unit 21 can be stored in the lead-acid battery 63 and the auxiliary storage battery 67.

At this time, if the external device is connected to the external output unit 66, the electric power from the first DC/DC converter 64 is output to the external device.

In this case, even when the battery pack 30A is fully charged, the electric power obtained from the hydrogen remaining in the tank unit 21 can be consumed by the external device.

Note that the FC system ECU 71 opens the open/close switch 63a (FIG. 4) in a case where the external device is not connected to the external output unit 66, and switches the open/close switch 63a from an open state to a closed state when the external device is connected to the external output unit 66. Therefore, the electric power stored in the lead-acid battery 63 can be suppressed from being output to the external device. This is because the electric power stored in the lead-acid battery 63 is electric power for auxiliary equipment of the work vehicle 1, and thus it is not preferable to wastefully discharge the power to the outside.

In a case where the external device is not connected to the external output unit 66, the electric power generated by the FC module 24 is stored in the lead-acid battery 63 and the auxiliary storage battery 67.

In addition, in a case where the external device is connected to the external output unit 66, the electric power generated by the FC module 24 and the electric power stored in the auxiliary storage battery 67 are output to the external device.

As described above, the electric power generated by the FC module 24 based on the consumption command is stored in the battery pack 30A, the lead-acid battery 63, and the auxiliary storage battery 67, or output to the external device.

The FC system ECU 71 that has caused the FC module 24 to start power generation based on the consumption command proceeds to step S7, and repeatedly determines whether the hydrogen amount in the tank unit 21 is equal to or less than the lower limit amount LA.

When determining that the hydrogen amount in the tank unit 21 is equal to or less than the lower limit amount LA, the FC system ECU 71 stops the power generation by the FC module 24 (step S8), and ends the processing.

Therefore, in a case where the FC module 24 acquires the consumption command, the FC module 24 generates power until the hydrogen amount in the tank unit 21 becomes equal to or less than the lower limit amount (predetermined amount) LA.

According to the above configuration, when the FC system ECU 71 (control device) acquires the consumption command, the FC module 24 generates power until the hydrogen amount in the tank unit 21 becomes equal to or less than the lower limit amount LA. In other words, the FC module 24 starts power generation when the consumption command is acquired, and stops power generation when the hydrogen amount in the tank unit 21 becomes equal to or less than the lower limit amount LA. Therefore, for example, at the time of making the work vehicle 1 stopped for a long period of time, the hydrogen remaining in the tank unit 21 can be consumed until the hydrogen amount becomes equal to or less than the lower limit amount LA, and the hydrogen amount in the tank unit 21 of the work vehicle 1 to be stopped for a long period of time can be reduced.

In a case where a large amount of hydrogen is remaining in the tank unit 21 of the work vehicle 1 to be stopped for a long period of time, it may be undesirable in managing hydrogen.

In this regard, according to the present embodiment, the hydrogen amount in the tank unit 21 can be reduced to make the tank unit 21 empty. When the tank unit 21 is empty, it is not necessary to manage hydrogen.

In this manner, hydrogen remaining in the tank unit 21 can be appropriately treated.

In addition, since the work vehicle 1 of the present embodiment further includes the main ECU 73 (operation unit) that, when receiving the operation input via the use-up switch 77 (second operation member) (step S3), outputs the consumption command to the FC system ECU 71 (step S6), it is possible to cause the FC module 24 to consume hydrogen remaining in the tank unit 21 until hydrogen becomes equal to or less than the lower limit amount LA by the operation input from the outside such as an occupant or the like.

In addition, in the present embodiment, the processing of outputting, to the FC system ECU 71, the consumption command performed by the main ECU 73 is executed in a case where the hydrogen amount in the tank unit 21 is equal to or less than the threshold Th in addition to receiving the operation input via the use-up switch 77. Therefore, it is possible to suppress the output of the consumption command when a large amount of hydrogen is remaining in the tank unit 21 and to suppress the unnecessary consumption of hydrogen in the tank unit 21.

That is, if a large amount of hydrogen is remaining in the tank unit 21, the tank unit 21 can be unloaded from the work vehicle 1, and the remaining hydrogen can be stored together with the tank unit 21.

On the other hand, in the present embodiment, in a case where a small amount of hydrogen that is not enough to store the entire tank unit 21 is remaining in the tank unit 21, the remaining hydrogen can be consumed by the FC module 24 and used as electric power.

Therefore, the threshold Th is set to a value with which a small amount of hydrogen that is not enough to store the entire tank unit 21 can be determined. The threshold Th is at least a value larger than the lower limit amount LA.

In this case, hydrogen is consumed by the difference between the threshold Th and the lower limit amount LA, by the consumption processing.

In addition, since the FC system ECU 71 of the present embodiment calculates electric power that can be generated (generatable electric power) by the FC module 24 in a case where hydrogen is used until the hydrogen amount in the tank unit 21 becomes the lower limit amount LA from the current amount, the hydrogen amount in the tank unit 21 can be output to the outside as electric power as necessary.

As a result, it is possible to appropriately grasp the hydrogen amount in the tank unit 21.

In the present embodiment, the generatable electric power calculated by the FC system ECU 71 is output by the FC display panel 72 (output device).

In the present embodiment, when receiving the operation input via the display switch 76 (first operation member) (step S1), the main ECU 73 (operation unit) causes the FC system ECU 71 to output the generatable electric power by the FC display panel 72 (step S2).

Therefore, the generatable electric power can be output to the occupant in response to the request of the occupant.

In addition, since the main ECU 73 of the present embodiment outputs the consumption command to the FC system ECU 71 when receiving the operation input via the use-up switch 77 after causing the FC display panel 72 to output the generatable electric power, it is possible to cause the occupant to grasp the hydrogen amount in the tank unit 21 and to cause the occupant to determine whether to operate the use-up switch 77.

As a result, hydrogen remaining in the tank unit 21 can be more appropriately treated.

### [Second embodiment]

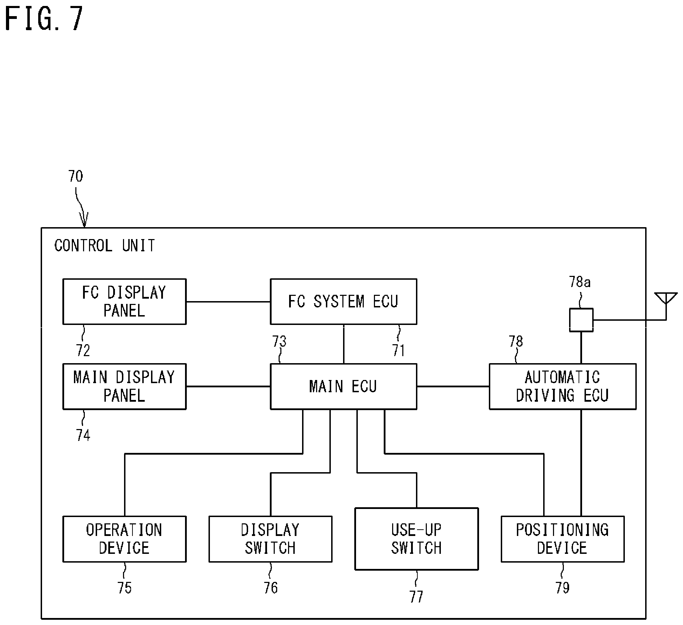

FIG. 7 is a block diagram illustrating a configuration example of a control unit 70 according to a second embodiment.

The control unit 70 of the present embodiment is different from the control unit 70 of the first embodiment in including an automatic driving ECU 78 and a positioning device 79.

The automatic driving ECU 78 has a function of executing processing necessary for automatic driving by a work vehicle 1. The automatic driving ECU 78 controls the movement of the work vehicle 1 via a main ECU 73.

Similarly to an FC system ECU 71 and the main ECU 73, the automatic driving ECU 78 is connected to a CAN. Therefore, the automatic driving ECU 78 can mutually communicate with the FC system ECU 71, the main ECU 73, and the electronic control unit and various devices illustrated in FIG. 4.

In addition, a wireless communication device 78a and the positioning device 79 are connected to the automatic driving ECU 78.

The wireless communication device 78a performs wireless communication with a server that controls automatic driving of the work vehicle 1.

The positioning device 79 (position detection unit) has a function of detecting the position of the own vehicle by GNSS positioning. The positioning device 79 provides the position of the own vehicle to automatic driving ECU 78. In addition, the positioning device 79 is also connected to the main ECU 73, and also provides the position of the own vehicle to the main ECU 73.

The automatic driving ECU 78 acquires a work plan of the work vehicle 1 from the server. The automatic driving ECU 78 executes automatic driving of the work vehicle 1 based on the work plan and the position of the own vehicle.

Therefore, the automatic driving ECU 78 gives a command, to the main ECU 73, according to the contents of the work plan. The main ECU 73 controls the work vehicle 1 according to the command.

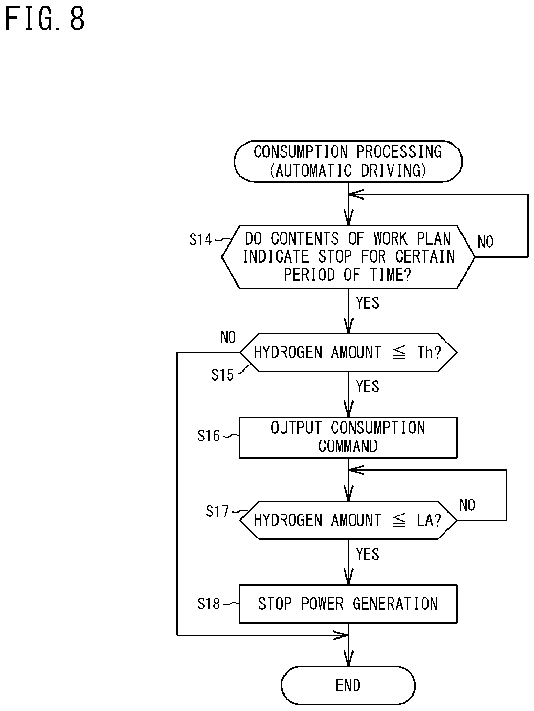

FIG. 8 is a flowchart indicating an example of consumption processing at the time of the execution of automatic driving.

In the consumption processing of the present embodiment, the main ECU 73 determines whether the contents of the work plan indicate that the own vehicle is to be brought into a stop state for a certain period of time from the current time point (step S14).

The main ECU 73 repeats step S14 until determining that the contents of the work plan indicate that the own vehicle is to be brought into the stop state for a certain period of time from the current time point.

When determining that the contents of the work plan indicate that the own vehicle is to be brought into the stop state for a certain period of time from the current time point, the main ECU 73 proceeds to step S15. In FIG. 8, steps S15 to S18 are similar to steps S5 to S8 in FIG. 6. Therefore, the description is omitted here.

As described above, in the present embodiment, in a case where the contents of the work plan of the own vehicle indicate that the own vehicle is to be brought into the stop state for a certain period of time from the current time point, the main ECU 73 (plan processing unit) executes processing of outputting a consumption command to a FC system ECU 71 (step S16).

Therefore, in a case where it is clear that the work vehicle 1 is to be brought into the stop state for a certain period of time, hydrogen remaining in the tank unit 21 is treated. Therefore, hydrogen remaining in the tank unit 21 can be appropriately treated without being operated by an occupant or the like of the work vehicle 1.

### [Others]

Note that it should be understood that the embodiment disclosed herein is illustrative in all respects and is not restrictive.

For example, in the first embodiment described above, the automatic driving ECU 78 and the positioning device 79 are not provided, but the work vehicle 1 of the first embodiment may include the positioning device 79.

In this case, the main ECU 73 may have a function of executing processing of causing an output to be made that an operation input is to be performed to the use-up switch 77 based on the position of the own vehicle.

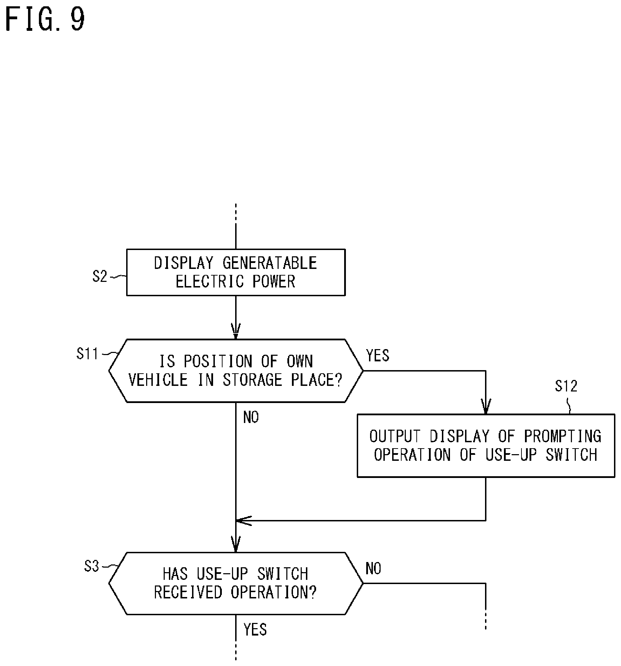

FIG. 9 is a part of a flowchart indicating an example of consumption processing according to a modification example of the first embodiment.

In the flowchart indicated in FIG. 9, step S11 and step S12 are added between step S2 and step S3 in FIG. 6. The contents other than step S11 and step S12 in FIG. 9 are similar to those in the flowchart of FIG. 6.

In FIG. 9, when the generatable electric power is displayed in step S2, the main ECU 73 determines whether the position of the own vehicle is a position of a storage place of the own vehicle (step S11).

In a case where the position of the own vehicle is not the position of the storage place of the own vehicle, the main ECU 73 proceeds to step S3.

On the other hand, in a case where the position of the own vehicle is the position of the storage place of the own vehicle, the main ECU 73 causes the main display panel 74 to output that the operation input is to be performed to the use-up switch 77 (step S12), and proceeds to step S3.

The main display panel 74 has a function as an output device that outputs that an operation input is to be performed to the use-up switch 77.

A mode when the main display panel 74 outputs that the operation input is to be performed includes outputting a display prompting the operation of the use-up switch 77 on the panel and outputting information prompting the operation of the use-up switch 77 by notification using voice.

In this case, in a case where there is a possibility that the work vehicle 1 is stopped in the storage place and stopped for a long period of time, it is possible to urge the occupant to treat hydrogen remaining in the tank unit 21.

In addition, in the first embodiment, the case has been exemplified where the display switch 76 is provided, and the main ECU 73 outputs the consumption command when receiving the operation input of the use-up switch 77 after receiving the operation input of the display switch 76. However, the work vehicle 1 can be configured without including the display switch 76. In this case, the main ECU 73 constantly determines the reception of the operation input of the use-up switch 77, and advances the consumption processing when receiving the operation input of the use-up switch 77.

In addition, in the above embodiment, the case has been exemplified where the fuel of the FC module 24 is hydrogen, but the fuel of the FC module 24 may be methane or carbon monoxide to generate electric power. In this case, hydrogen in the above embodiment may be replaced with methane or carbon monoxide.

The scope of the present invention is defined not by the above meaning but by the claims, and is intended to include meanings equivalent to the claims and all modifications within the scope.

In addition, the reference signs used in Chapter 1 are used only in Chapter 1, and are not related to the reference signs of other chapters.

### REFERENCE SIGNS LIST

- 1: work vehicle
- 11: vehicle body
- 12: traveling device
- 12A: front wheel
- 12B: rear wheel
- 13: hydrogen tank
- 14: drive device
- 15: driver's seat
- 16: cabin
- 17: installation frame
- 17A: ceiling frame
- 17B: pillar
- 17C: reinforcing frame
- 21: tank unit
- 22: pipe
- 22A: pipe portion
- 22B: pipe portion
- 24: FC module
- 24a: fuel cell stack
- 24b: step-up circuit
- 24c: ECU
- 25: electric path
- 30: battery unit
- 30A: battery pack
- 31: electric motor
- 32: front frame
- 33: transmission case
- 33a: power transmission mechanism
- 34: hood
- 37: support frame
- 41: chassis
- 44: coupling device
- 44A: upper arm
- 44B: lower arm
- 48: first radiator
- 49: second radiator
- 50: on-off valve
- 51: valve unit
- 52: filling port
- 53: pressure sensor
- 54: temperature sensor
- 62: inverter
- 62a: ECU
- 63: lead-acid battery
- 63a: open/close switch
- 64: first DC/DC converter
- 64a: ECU
- 65: second DC/DC converter
- 65a: ECU
- 66: external output unit
- 67: auxiliary storage battery
- 70: control unit
- 71: FC system ECU
- 72: FC display panel
- 73: main ECU
- 74: main display panel
- 75: operation device
- 76: display switch
- 77: use-up switch
- 78: automatic driving ECU
- 78a: wireless communication device
- 79: positioning device
- 111: cover
- 334: PTO shaft
- 335: working device

### <Chapter 2>

Next, preferred embodiments of the present disclosure in Chapter 2 will be described with reference to the accompanying drawings.

### BACKGROUND ART

In recent years, there has been proposed a work vehicle such as a tractor using a fuel cell that generates power by hydrogen instead of an internal combustion engine using fossil fuel from the viewpoint of protecting the global environment, and operating a traveling device and a working device by an electric motor driven by the generated electric power. For example, Japanese Patent Application Laid-Open No. 2023-13186 discloses a work vehicle in which a fuel cell and a hydrogen tank are mounted, and hydrogen in the hydrogen tank is supplied to the fuel cell to generate power.

### [Problems to be solved by present disclosure]

In a work vehicle including a fuel cell, it is required that hydrogen gas discharged from a hydrogen tank is appropriately supplied to the fuel cell and consumed in the fuel cell. However, in the work vehicle of Patent Literature 1, it is not possible to grasp whether the supply state of hydrogen gas is appropriate.

Therefore, the present disclosure provides a work vehicle capable of grasping a fuel supply state from a fuel tank to a fuel cell.

### [Effects of present disclosure]

According to the present disclosure, a fuel supply state from a fuel tank to a fuel cell can be grasped in a work vehicle driven by the fuel cell.

### [Outline of embodiments]

Hereinafter, contents of the embodiments will be listed and described.

(10) A work vehicle according to the present disclosure includes: a fuel cell; a fuel tank that accommodates fuel to be supplied to the fuel cell; a detection device that detects a state of fuel discharged from the fuel tank; and a control device. The control device calculates a fuel discharge amount based on the state of fuel detected by the detection device and a fuel consumption amount consumed in the fuel cell.

According to the above configuration, the supply state of the fuel from the fuel tank to the fuel cell can be grasped using the fuel discharge amount discharged from the fuel tank and the fuel consumption amount consumed in the fuel cell.

(11) In the work vehicle according to (10), the control device calculates a difference between the fuel discharge amount and the fuel consumption amount, and determines whether an abnormality exists based on the difference.

According to the above configuration, how much the fuel discharged from the fuel tank is consumed by the fuel cell can be grasped based on the difference between the fuel discharge amount and the fuel consumption amount, and a determination can be made whether an abnormality such as fuel leakage in a supply path exists.

(12) The work vehicle according to (11) includes a notification device that notifies a determination result as to whether the abnormality exists.

According to this configuration, a user can easily recognize that an abnormality has occurred in the fuel supply from the fuel tank to the fuel cell.

(13) The work vehicle according to (10) or (11) includes a notification device that notifies the fuel discharge amount and the fuel consumption amount.

According to this configuration, how much the fuel discharged from the fuel tank is consumed by the fuel cell can be easily grasped based on the notified fuel discharge amount and fuel consumption amount.

(14) The work vehicle according to any one of (10) to (13) includes: a plurality of the fuel tanks; and on-off valves that are provided corresponding to the respective plurality of fuel tanks and switch discharge of fuel from the fuel tank and stop of the discharge, in which the detection device includes a pressure sensor that detects a pressure of fuel merged from the plurality of fuel tanks via the on-off valves, and the control device calculates the fuel discharge amount based on the pressure detected by the pressure sensor.

According to this configuration, when one of the plurality of on-off valves is not opened due to a defect and the fuel is discharged from only some of the fuel tanks, the pressure sensor detects only the pressure of the fuel discharged from some of the fuel tanks. The decrease in pressure in this case is greater than a case where the same amount of fuel is discharged from all the fuel tanks. Since the fuel discharge amount correlates with the detection value of the pressure and the volume of the fuel tank, when the fuel discharge amount is obtained based on the detection value of the pressure and the volumes of all the fuel tanks, a difference occurs between the obtained fuel discharge amount and the fuel discharge amount actually discharged, that is, the fuel consumption amount consumed in the fuel cell. Therefore, whether a defect has occurred in the on-off valve can be determined by this difference.

(15) In the work vehicle according to (14), the control device calculates a difference between the fuel discharge amount and the fuel consumption amount, determines whether an abnormality exists based on the difference, and closes all the on-off valves based on a determination that the abnormality exists.

According to this configuration, in a case where the abnormality due to the defect in the on-off valve is determined, the supply of the fuel from the fuel tank to the fuel cell is stopped by closing all the on-off valves, and the continuation of the state in which the fuel is not appropriately supplied can be suppressed.

(16) In the work vehicle according to any one of (11), (12), and (15), the control device calculates a difference between a first integrated value obtained by integrating the fuel discharge amount for a predetermined period and a second integrated value obtained by integrating the fuel consumption amount for the predetermined period.

According to this configuration, accumulation of errors can be suppressed by integrating the fuel discharge amount and the fuel consumption amount by dividing the fuel discharge amount and the fuel consumption amount by a predetermined period, and the supply state from the fuel tank to the fuel cell can be accurately grasped.

(17) In the work vehicle according to (16), the control device repeatedly executes determination processing in which calculation of the first integrated value and the second integrated value, the determination, and reset of the first integrated value and the second integrated value are set as one cycle.

According to the above configuration, the first and second integrated values are calculated by dividing the first and second integrated values by a predetermined period, the first and second integrated values are reset each time the determination is made whether an abnormality exists, and the repetitive determination processing is repeated, whereby accurate determination can be continuously performed.

(18) In the work vehicle according to (17), the control device determines existence of an abnormality once in determination processing as a temporary abnormality determination, and in a case where the temporary abnormality determination is continuously made a predetermined number of times, the control device confirms a last temporary abnormality determination as a formal abnormality determination.

According to the above configuration, making a determination that the abnormality exists by a temporary erroneous detection or the like of the detection device can be suppressed.

(19) The work vehicle according to any one of (10) to (18), includes a pipe that connects the fuel tank and the fuel cell and allows fuel to flow from the fuel tank to the fuel cell, in which
the detection device includes a pressure sensor that is connected to the pipe and detects a pressure of fuel flowing through the pipe, and the control device calculates the fuel discharge amount based on the pressure detected by the pressure sensor.

According to this configuration, the fuel discharge amount can be obtained from the detection value of the pressure sensor provided in the pipe.

(20) The work vehicle according to (19), further includes a pressure reducing valve provided in the pipe, in which the pressure sensor is provided between the pressure reducing valve and the fuel tank in the pipe.

According to this configuration, the pressure of the fuel before being reduced by the pressure reducing valve and corresponding to the pressure in the fuel tank can be detected by the pressure sensor.

(21) In the work vehicle according to (19) or (20), the detection device includes a temperature sensor that detects a temperature in the fuel tank or a temperature in the pipe, and the control device calculates the fuel discharge amount based on the temperature detected by the temperature sensor.

According to this configuration, since the temperature of the fuel is correlated with the discharge amount of the fuel, the fuel discharge amount can be obtained based on this temperature.

### [Details of embodiments]

Hereinafter, embodiments of the present disclosure will be described in detail with reference to the drawings. Note that at least some of the embodiments described below may be arbitrarily combined.

### [Overall structure of work vehicle]

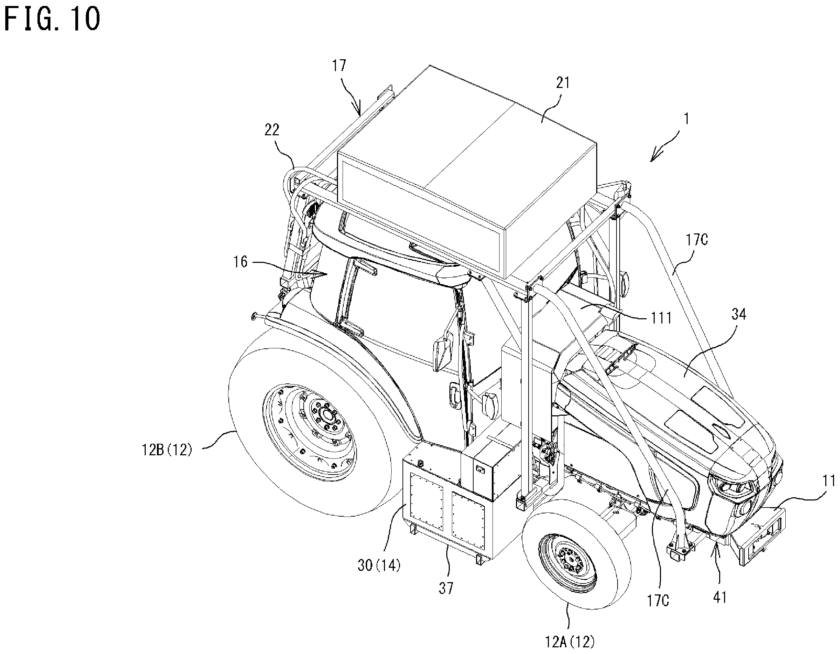

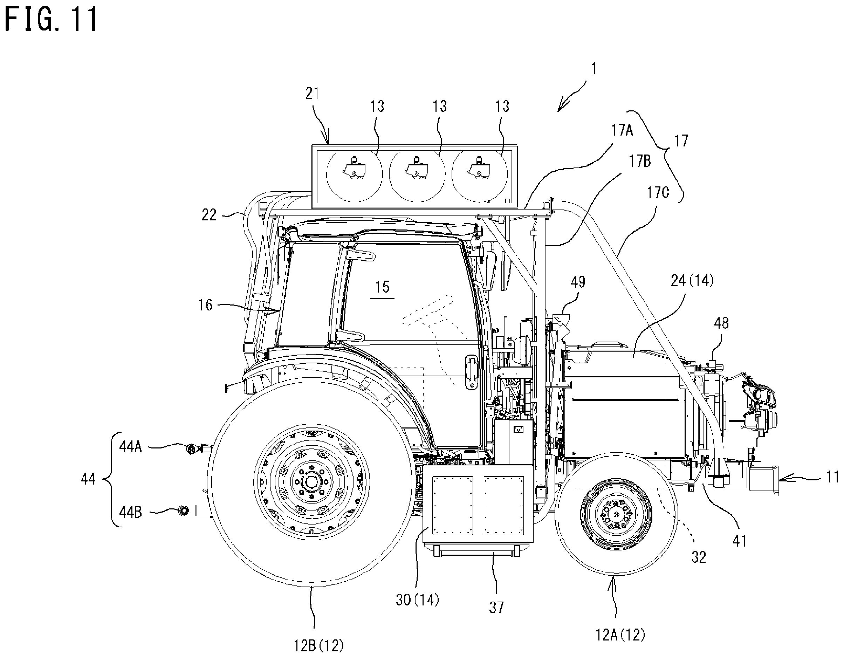

FIG. 10 is a perspective view of a work vehicle. FIG. 11 is a right side view of the work vehicle from which a part of an exterior component is removed.

As illustrated in FIGS. 10 and 11, a work vehicle 1 is a vehicle, specifically, a tractor, used for farmwork. However, the work vehicle 1 is not limited to the tractor, and may be a moving body such as an agricultural machine, a construction machine, or a utility vehicle.

The work vehicle 1 includes a vehicle body 11, a traveling device 12 that supports the vehicle body 11, a driver's seat 15, a cabin 16, and the like. The vehicle body 11 includes a chassis 41, the hood 34, the cover 111, the cabin 16, a fender for a rear wheel 12B, and the like.

Specifically, in the chassis 41 of the vehicle body 11, the hood 34 and the cover 111 are mounted in order from a front portion toward a rear portion, and the cabin 16 is disposed behind the cover 111.

The work vehicle 1 further includes a tank unit 21 including a plurality of tanks (fuel tanks) 13 (see FIG. 11) for storing fuel therein, and a drive device 14 driven by the stored fuel.

The fuel is liquid or gas. The fuel is, for example, hydrogen, methane, or carbon monoxide (CO). The fuel of the present embodiment is hydrogen, and each of the plurality of tanks 13 is a hydrogen tank that stores hydrogen gas (also simply referred to as "hydrogen"). Therefore, the work vehicle 1 is a fuel cell vehicle (FCV), and travels using electric power generated by a chemical reaction between hydrogen and oxygen by a fuel cell 24 as an energy source. The fuel cell 24 may generate electric power by methane or carbon monoxide.

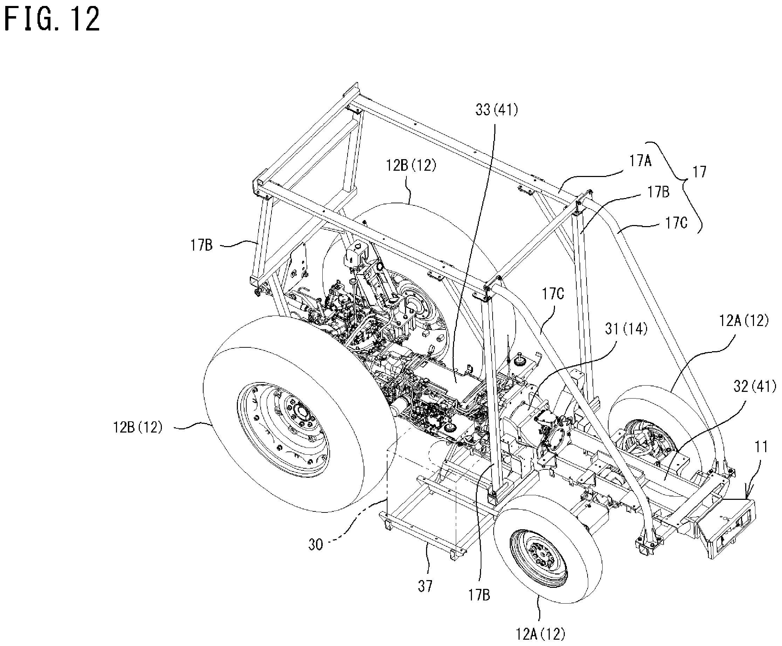

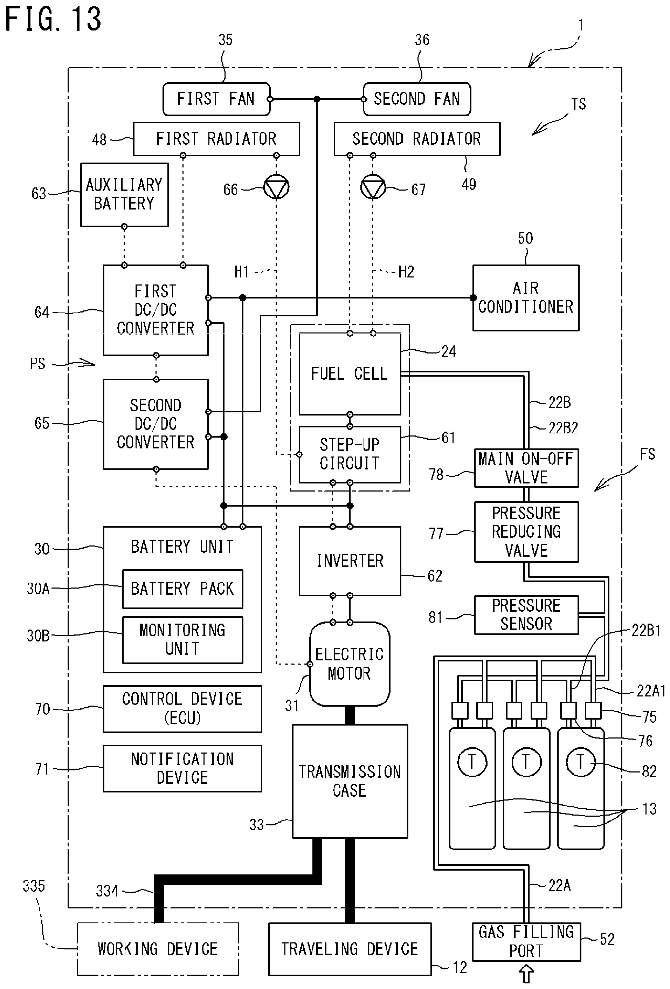

The drive device 14 includes the fuel cell 24, a battery unit 30, and an electric motor 31 (see FIG. 12: hereinafter, also referred to as "motor 31"). The battery unit 30 incorporates at least one battery pack 30A (see FIG. 13) that stores the output electric power of the fuel cell 24.

The work vehicle 1 includes a pipe 22 of hydrogen gas. The hydrogen gas is supplied from a gas filling port 52 (see FIG. 13) connected to an end portion of the pipe 22 and is filled in each tank 13. The hydrogen gas in the tank 13 is supplied to the fuel cell 24 through the pipe 22.

The cabin 16 is a partitioned cab including front pillars, rear pillars, and a roof. The front pillars are disposed on the left and right on the front side of the driver's seat 15, and the rear pillars are disposed on the left and right on the rear side of the driver's seat 15.

The work vehicle 1 may include a canopy or a rollover protective structure (ROPS) instead of the cabin 16. The tank unit 21 is disposed above the driver's seat 15 and the cabin 16 by an installation frame 17 to be described later.

The traveling device 12 includes front wheels 12A and rear wheels 12B. These components are disposed symmetrically with respect to the vehicle body 11. One or both of the front wheels 12A and the rear wheels 12B are rotated by the power of the motor 31. One or both of the front wheels 12A and the rear wheels 12B (drive wheels) rotated by the power of the motor 31 may be crawlers (caterpillars).

As illustrated in FIG. 11, a first radiator 48, the fuel cell 24, and a second radiator 49 are mounted on a portion of the chassis 41 corresponding to the front wheels 12A in order from the front side toward the rear side. The first radiator 48 and the fuel cell 24 are covered with the hood 34 illustrated in FIG. 10, and the second radiator 49 is covered with the cover 111.

As illustrated in FIG. 10, an upper surface of the cover 111 is higher than the uppermost end of the hood 34 but lower than the uppermost end of a steering wheel of the driver's seat 15. In addition, a rear end portion of the hood 34 is located lower than the cover 111, and an upper surface of the hood 34 is formed in a tapered shape gradually decreasing from a rear end portion toward a front end portion. Therefore, the front view from a worker sitting on the driver's seat 15 is less likely to be obstructed.

### [Internal structure of work vehicle]

FIG. 12 is a perspective view illustrating an example of an internal structure of the work vehicle.

As illustrated in FIG. 12, the chassis 41 constituting the vehicle body 11 is made of a steel frame having a shape elongated in the front-rear direction, and includes a front frame 32 and a transmission case 33.

The transmission case 33 is coupled to a rear portion of the front frame 32, and a framework of the vehicle body 11 is formed by the transmission case 33 and the front frame 32.

The installation frame 17 for disposing the tank unit 21 above the cabin 16 is coupled to the chassis 41. The installation frame 17 includes a ceiling frame 17A having a substantially rectangular shape in which the front-rear direction is longer than the left-right direction, a plurality of pillars 17B supporting the ceiling frame 17A from below, and a pair of left and right reinforcing frames 17C coupled to a front end portion of the ceiling frame 17A.

The tank unit 21 is coupled to the ceiling frame 17A in a horizontal state. As illustrated in FIG. 11, the ceiling frame 17A is located higher than the roof of the cabin 16. Thus, the tank unit 21 is disposed above the roof of the cabin 16.

The reinforcing frames 17C are reinforcing swash members inclined downward from the front end portion of the ceiling frame 17A to the front frame 32. Therefore, the rigidity of the installation frame 17 in the front-rear direction is enhanced as compared with the case where the ceiling frame 17A and the tank unit 21 are supported only by the pillars 17B.

A support frame 37 for causing the vehicle body 11 to support the battery unit 30 is coupled to the chassis 41 of the work vehicle 1.

Specifically, the motor 31 is mounted on the front frame 32 of the chassis 41, and the support frame 37 is attached to a portion of the front frame 32 corresponding to the motor 31. The support frame 37 is made of, for example, a metal frame member, and is attached in a cantilevered state so as to protrude rightward from the front frame 32.

The transmission case 33 located behind the motor 31 has a power transmission mechanism therein. The power transmission mechanism includes a transmission, a clutch, and a differential gear, and decelerates or accelerates the rotation of an output shaft of the motor 31 to transmit the rotation to the traveling device 12.

The power transmission mechanism inside the transmission case 33 includes a branch mechanism that outputs a portion of the power of the motor 31 to a PTO shaft 334 (see FIG. 13). The PTO shaft 334 is an output shaft protruding rearward from the transmission case 33.

A coupling device 44 (see FIG. 11) configured by, for example, a three-point link mechanism for coupling a working device 335 (see FIG. 13. It is also referred to as an "implement") for performing desired farmwork to the rear of the vehicle body 11 is attached to the transmission case 33.

The three-point link mechanism can include, for example, an upper arm 44A protruding rearward from the transmission case 33 and a pair of left and right lower arms 44B. The working device 335 is, for example, a cultivator, a baler, or the like.

The rotational movement of the PTO shaft 334 is transmitted to an input shaft of the working device 335 coupled to the coupling device 44, for example, during driving of the traveling device 12. Therefore, the work vehicle 1 can drive the working device 335 by the power of the motor 31 while traveling in a field or the like.

### [Functional configuration of work vehicle]

FIG. 13 is a block diagram illustrating an example of a functional configuration of the work vehicle.

As illustrated in FIG. 13, the functional system of the work vehicle 1 includes a fuel system FS, a power system PS, and a temperature control system TS.

The components of the fuel system FS include at least one tank 13, valves 75 to 78, sensors 81 and 82, and the like. Components of the temperature control system TS include a plurality of radiators 48 and 49, an air conditioner 50, and the like. Components of the power system PS include the fuel cell 24, a step-up circuit 61, an inverter 62, the motor 31, the transmission case 33, DC/DC converters 64 and 65, the battery unit (hereinafter, also referred to as a "first battery") 30, and the like.

The work vehicle 1 of the present embodiment includes a plurality of tanks 13, for example, three tanks 13. Each tank 13 is connected to pipes 22A and 22B. The pipe 22A is a gas pipe connecting the gas filling port 52 and each tank 13. The pipe 22A guides hydrogen gas introduced into the gas filling port 52 to each tank 13. The pipe 22A is plurally branched on the downstream side, and each branch portion 22A1 is connected to the respective one of the tanks 13. A check valve 75 is provided in each branch portion 22A1 of the pipe 22A. Each check valve 75 suppresses backflow of hydrogen gas from each tank 13 toward the gas filling port 52.

The pipe 22B is a gas pipe connecting the fuel cell 24 and the tank 13. The pipe 22B guides the hydrogen gas stored in each tank 13 to the fuel cell 24. The pipe 22B is plurally branched on the upstream side, and each branch portion 22B1 is connected to the respective one of the tanks 13. An on-off valve 76 is provided in each branch portion 22B1 of the pipe 22B. Each on-off valve 76 switches between discharge of hydrogen and stop (shut-off) of the discharge in each tank 13.

A pressure reducing valve 77 and a main on-off valve 78 are provided at a merging portion 22B2 of the pipe 22B. The pressure reducing valve 77 reduces the pressure of the hydrogen gas discharged from the tank 13. The pressure of the hydrogen gas in the tank 13 is, for example, 35 megapascals or more, whereas the pressure of the hydrogen gas after being reduced by the pressure reducing valve 77 is, for example, about 2 atmospheres. The main on-off valve 78 switches between supply of the hydrogen gas reduced by the pressure reducing valve 77 to the fuel cell 24 and stop (shut-off) of the supply.

A pressure sensor 81 is provided between the plurality of on-off valves 76 and the pressure reducing valve 77. The pressure sensor 81 is provided at the merging portion 22B2 of the pipe 22B. The pressure sensor 81 detects the pressure of the hydrogen gas discharged from the plurality of tanks 13. The pressure detected by the pressure sensor 81 corresponds to the pressure of the hydrogen gas in the tank 13 discharging the hydrogen gas through the on-off valve 76. In addition, each tank 13 is provided with a temperature sensor 82. The temperature sensor 82 detects the temperature of the hydrogen gas in the tank 13. The pressure sensor 81 and the temperature sensor 82 constitute a detection device that detects a state of hydrogen (fuel).

The hydrogen gas discharged from the tank 13 and flowing through the pipe 22B is supplied to the fuel cell 24. The fuel cell 24 is, for example, a battery module configured by arranging a plurality of single cells having a positive electrode and a negative electrode in a stacked state. The fuel cell 24 collects electric power generated by each single cell and generates electric power necessary for driving the electric motor 31.

The fuel cell 24 is connected to the second radiator 49 through a cooling flow path H2. An electrode of the fuel cell 24 is adjusted to a predetermined temperature by a coolant circularly supplied from the second radiator 49. Therefore, the fuel cell 24 can maintain high power generation efficiency.

The fuel cell 24 is electrically connected to an input side of the step-up circuit 61, and an output side of the step-up circuit 61 is electrically connected to a DC side of the inverter 62. The step-up circuit 61 increases a voltage input from the fuel cell 24, and outputs the increased voltage to the inverter 62 and the battery unit 30.

The inverter 62 is electrically connected to the motor 31. The inverter 62 converts a direct current input from the step-up circuit 61 into a three-phase alternating current and outputs the three-phase alternating current to the motor 31. Therefore, the electric power generated by the fuel cell 24 is stepped up and converted into alternating current, and transmitted to the motor 31.

The motor 31 includes a rotor and a stator including a plurality of coils, and drives an output shaft with predetermined torque and rotational speed. For example, only one motor 31 is mounted on the work vehicle 1, and the output shaft of the motor 31 is coupled to the transmission case 33. A plurality of the motors 31 may be mounted. For example, when two types of motors 31 for the front wheels 12A and the rear wheels 12B are provided, the power of each motor 31 may be output to each of the front wheels 12A and the rear wheels 12B.

The power transmission mechanism of the transmission case 33 outputs all or a part of the power of the motor 31 to the traveling device 12. In addition, in a case where the working device 335 is operated, the power transmission mechanism also outputs the power of the motor 31 to the PTO shaft 334.

The battery unit 30 is a power storage device that absorbs load variation of the fuel cell 24. Specifically, the battery unit 30 temporarily charges the electric power supplied from the step-up circuit 61, discharges the power at the time of high load, and supplies the driving power to the motor 31 to the inverter 62.

The battery unit 30 includes the battery pack 30A and a monitoring unit 30B. The battery pack 30A includes at least one cell. The cell is a charge/discharge type such as a lithium ion battery cell. The output voltage of the battery unit 30 is, for example, 24 V.

The monitoring unit 30B includes a processor that performs switching control of the operation (charging or discharging) of the battery pack 30A and measurement of the charging state (for example, SOC).

The work vehicle 1 includes a plurality of electrical components that operate at a voltage lower than that of the motor 31. DC power stepped down by a step-down circuit is supplied to these electrical components.

The plurality of electrical components includes, for example, an auxiliary battery (hereinafter, also referred to as a "second battery") 63, the radiators 48 and 49, and the air conditioner 50. The step-down circuit is, for example, a plurality of DC/DC converters 64 and 65 (hereinafter, also referred to as a "first converter 64" and a "second converter 65") having different output voltages.

The first converter 64 steps down the DC voltage input from the step-up circuit 61 to a first voltage (for example, 12 volts) and supplies the first voltage to the auxiliary battery 63, the air conditioner 50, and the like.

The second converter 65 steps down the DC voltage input from the step-up circuit 61 to a second voltage (for example, 24 volts) and supplies the second voltage to the radiators 48 and 49. The inverter 62 and the converters 64 and 65 are disposed in a portion of the chassis 41 corresponding to the driver's seat 15. Note that the second voltage of the second converter 65 may be supplied to the battery unit 30.

As described above, the first radiator 48 is disposed in front of the fuel cell 24, and the second radiator 49 is disposed behind the fuel cell 24 (see FIG. 11).

These radiators 48 and 49 constitute a cooling system that cools electrical components such as the fuel cell 24, the step-up circuit 61, the inverter 62, the motor 31, the first converter 64, and the second converter 65 with a coolant (refrigerant).

The first radiator 48 is connected to a cooling flow path H1 through which the coolant is circulated by a pump 66, and the coolant is cooled by heat exchange with external air. The first radiator 48 includes a first fan 35 for promoting the heat exchange with the external air.

The cooling target of the cooling flow path H1 of the first radiator 48 is, for example, electrical components (heat generating components) such as the step-up circuit 61, the inverter 62, the motor 31, the first converter 64, and the second converter 65.

The second radiator 49 is connected with the cooling flow path H2 through which the coolant is circulated by a pump 67, and the coolant is cooled by heat exchange with external air. The second radiator 49 includes a second fan 36 for promoting the heat exchange with the external air.

The cooling target of the cooling flow path H2 of the second radiator 49 is, for example, electrical components such as the fuel cell 24.

The auxiliary battery 63 is a power storage device that supplies electric power to a display, a communication device, and the like mounted on the driver's seat 15. The auxiliary battery 63 is, for example, a charge/discharge type lead-acid battery. The output voltage of the auxiliary battery (second battery) 63 is, for example, 12 V, and is lower than the output voltage (for example, 24 V) of the battery unit (first battery) 30.

The auxiliary battery 63 can also be used as an auxiliary power supply that supplies electric power to a control device 70 described later in a case where the fuel cell 24 is stopped.

As illustrated in FIG. 13, the work vehicle 1 further includes the control device 70. The control device 70 can include, for example, an electronic control unit (ECU) that communicates with various electrical components according to a communication protocol such as a controller area network (CAN). For example, the control device 70 includes an ECU that integrally controls the entire system from power generation by the fuel cell 24 to power output, and ECUs related to individual control of a fuel cell module including the fuel cell 24 and the step-up circuit 61, a tank module including the tank 13 and the valves 75 to 78, and the like. Therefore, the control device 70 performs opening/closing control of the valves 75 to 78 included in the tank module, flow rate control of an injector that injects hydrogen into the fuel cell 24, acquisition of detection values of the pressure sensor 81 and the temperature sensor 82, and the like.

The control device 70 executes, for example, supply monitoring control for monitoring a supply state of hydrogen gas from the tank 13 to the fuel cell 24. Specifically, the control device 70 determines whether an abnormality has not occurred in the supply state of the hydrogen gas. The contents of the supply monitoring control will be described below.

### [Supply monitoring control]

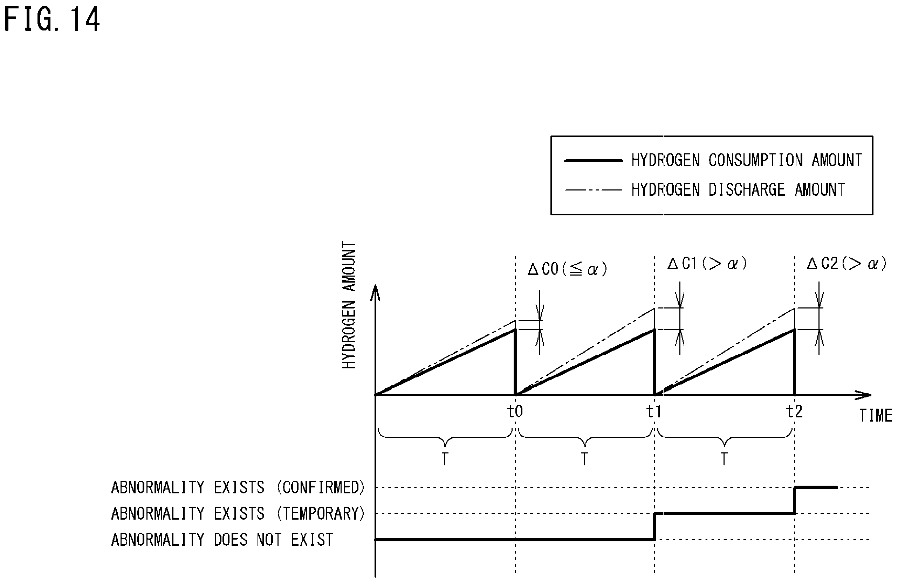

FIG. 14 is a graph for describing an abnormality determination method used for supply monitoring control of hydrogen.

The control device 70 acquires detection values of the pressure sensor 81 and the temperature sensor 82 for the supply monitoring control, and calculates a discharge amount of the hydrogen gas discharged from the tank 13 based on these detection values. The pressure and temperature of the hydrogen gas in the tank 13 are correlated with the filling amount of the hydrogen gas. In particular, the pressure of the hydrogen gas in the tank 13 decreases due to a decrease in the filling amount of the hydrogen gas in the tank 13. In other words, the pressure of the hydrogen gas in the tank 13 decreases due to an increase in the discharge amount of the hydrogen gas. Therefore, the discharge amount (fuel discharge amount) of the hydrogen gas in the tank 13 can be obtained using the pressure and temperature in the tank 13.

Specifically, the control device 70 obtains the filling amount of the hydrogen gas in the tank 13 by the state equation using the volume of the tank 13, the pressure of the hydrogen gas, the temperature of the hydrogen gas, the hydrogen gas constant, the correction coefficient (hydrogen compression coefficient or the like), and the like, and obtains the hydrogen discharge amount from the decrease amount of the filling amount (difference from the previously obtained filling amount). In addition, the control device 70 integrates the hydrogen discharge amount from the tank 13 for a predetermined period T. For example, in FIG. 14, the hydrogen discharge amount repeatedly integrated with the period T as one cycle is indicated by a dotted line graph. When the period T elapses, the control device 70 resets the integrated value (second integrated value) of the hydrogen discharge amount and newly integrates the hydrogen discharge amount. The period T can be, for example, 30 to 60 seconds.

Similarly, the control device 70 integrates the hydrogen consumption amount (fuel consumption amount) consumed in the fuel cell 24 for the predetermined period T. In FIG. 14, the hydrogen consumption amount repeatedly integrated with the period T as one cycle is indicated by a solid line graph. Specifically, the control device 70 integrates the flow rate (injection amount per unit time) of the hydrogen gas injected from the injector to the fuel cell 24, and obtains the hydrogen consumption amount in the predetermined period T. When the period T elapses, the control device 70 resets the integrated hydrogen consumption amount and newly integrates the hydrogen consumption amount.

The control device 70 compares the integrated hydrogen discharge amount with the hydrogen consumption amount. Specifically, the control device 70 obtains a difference ΔC between the hydrogen discharge amount and the hydrogen consumption amount. In a case where the difference ΔC exceeds a predetermined threshold α, the hydrogen gas discharged from the tank 13 is not properly consumed in the fuel cell 24. For example, there is a possibility that the hydrogen gas is leaking in a supply path of the hydrogen gas from the tank 13 to the fuel cell 24. In addition, other than the leakage of the hydrogen gas, there is a possibility that a defect is occurring in the on-off valve 76. Therefore, in a case where the difference ΔC exceeds the predetermined threshold α, the control device 70 determines that an abnormality has occurred.

Hereinafter, the determination of the abnormality due to the defect in the on-off valve 76 will be described.

The control device 70 opens the on-off valve 76 corresponding to all the tanks 13 in a case where the fuel cell 24 performs power generation. Then, the pressure of the hydrogen gas in all the tanks 13 is detected by the pressure sensor 81, and the hydrogen discharge amount is calculated using the pressure and the volumes of all the tanks 13. However, if any of the on-off valves 76 is not appropriately opened due to a defect or the like, and hydrogen is discharged from only some of the tanks 13, the decrease amount of the pressure becomes larger than the case where hydrogen is discharged from all the tanks 13. Since the control device 70 calculates the hydrogen discharge amount assuming that hydrogen is released from all the tanks 13, the calculated hydrogen discharge amount is larger than the actual hydrogen discharge amount, and is larger than the hydrogen consumption amount in the fuel cell 24. Therefore, in a case where the difference ΔC between the calculated hydrogen discharge amount and the hydrogen consumption amount exceeds the threshold α and is large, not only the leakage of hydrogen gas but also a possibility of defect in the on-off valve 76 is considered. In the present embodiment, by using the detection value of the pressure sensor for the calculation of the hydrogen discharge amount, it is possible to determine an abnormality caused by a defect (opening/closing failure) in the on-off valve 76.

As illustrated in FIG. 13, the work vehicle 1 includes a notification device 71. The notification device 71 includes a liquid crystal panel that displays characters and drawings, a display panel such as an organic electro luminescence (EL) panel, a lamp such as a light emitting diode (LED) that emits light, a speaker or a buzzer that emits voice or a sound effect, and the like. The notification device 71 is disposed, for example, in the driver's seat 15.

The notification device 71 is controlled by the control device 70. In a case where the difference ΔC between the hydrogen discharge amount and the hydrogen consumption amount exceeds the predetermined threshold α as described above, the control device 70 determines that there is an abnormality and controls the notification device 71 to notify the user of the abnormality. The notification device 71 can notify information indicating "abnormality". For example, information such as "hydrogen supply abnormality", "hydrogen leakage", and "valve abnormality" can be displayed in characters or can be emitted by voice. In addition, when it is determined that there is an abnormality, the lamp can be turned on or blinked. The notification device 71 can display the hydrogen discharge amount and the hydrogen consumption amount obtained by the calculation in characters or emit the hydrogen discharge amount and the hydrogen consumption amount by voice. A user can grasp that there is an abnormality in the supply state of the hydrogen gas by the notification of the notification device 71. In addition, the user can perform a measure for eliminating the abnormality, for example, inspection of the pipe 22 and the on-off valve 76, replacement of parts, and the like based on the notification by the notification device 71.

The control device 70 may close all the on-off valves 76 when an abnormality is confirmed. As a result, it is possible to prevent the fuel cell 24 from being driven while leakage of hydrogen gas or a defect in the on-off valve 76 occurs.

The control device 70 of the present embodiment is configured to notify the abnormality by the notification device 71 when it is determined that there is an abnormality continuously occurring for a predetermined number of times. For example, at time t0 indicated in FIG. 14, a difference ΔC0 does not exceed the threshold α and is in a normal state, and at the next time t1, a difference ΔC1 exceeds the threshold α. However, the abnormality is not confirmed at the time point t1, and the abnormality is determined as "temporary". Since the difference ΔC2 also exceeds the threshold α at the next time t2, the control device 70 determines the abnormality as "temporary". Then, when the "temporary" abnormality determination is continuously made a predetermined number of times, the control device 70 determines the last "temporary" abnormality determination as the formal abnormality determination and confirms the abnormality.

In the example indicated in FIG. 14, the abnormality is formally confirmed by the temporary abnormality determination performed twice, and the notification device 71 notifies the abnormality. In this manner, by determining the abnormality on condition that the determination of the abnormality continues for a predetermined number of times, it is possible to eliminate the determination of the abnormality caused by the temporary defect, for example, the temporary erroneous detection of the sensors 81 and 82 or the temporary defect in the on-off valve 76.

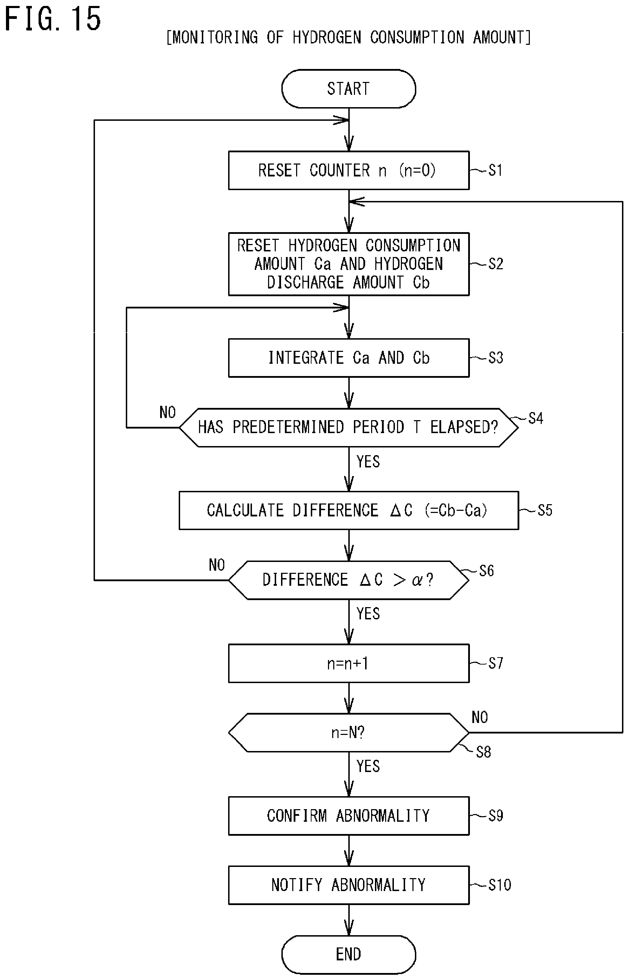

FIG. 15 is a flowchart indicating an example of a procedure of abnormality determination by a control device.

The procedure of the abnormality determination described above will be described with reference to the flowchart of FIG. 15.

In step S1, the control device 70 resets a counter n indicating the number of consecutive times of abnormality determination of "temporary" (n=0). Next, in step S2, the control device 70 resets each of a hydrogen consumption amount Ca and a hydrogen discharge amount Cb (Ca=Cb=0).

Next, in step S3, the control device 70 integrates the hydrogen consumption amount Ca and the hydrogen discharge amount Cb. Then, in step S4, the control device 70 determines whether the predetermined period T has elapsed from the start of the integration, and when the predetermined period T has elapsed, the difference ΔC is calculated in step S5.

In step S6, the control device 70 determines whether the difference ΔC exceeds the predetermined threshold α. In a case where the determination in step S6 is negative (difference ΔC ≤ threshold α), the control device 70 returns the processing to step S1 and performs the processing of steps S1 to S5 again.

In a case where the determination in step S6 is positive (difference ΔC > threshold α), the control device 70 increments the value of the counter n by one in step S7. Then, in step S8, the control device 70 determines whether the value of the counter n has reached the number of times N necessary to confirm the abnormality (n=N). In a case where the determination in step S8 is negative, the control device 70 returns the processing to step S2 and performs the processing of steps S2 to S7 again. In a case where the determination in step S8 is positive, the control device 70 confirms the abnormality in step S9. Thereafter, in step S10, the control device 70 controls the notification device 71 to notify the abnormality.

### [Other modifications]

The embodiments disclosed herein are illustrative in all respects and are not restrictive. The scope of the present invention is not limited to the above-described embodiments, and includes all modifications within the scope equivalent to the configurations described in the claims.

For example, the work vehicle 1 of the above embodiment includes the plurality of tanks 13, but may include one tank 13. A plurality of pressure sensors 81 may be provided corresponding to the plurality of tanks 13. In this case, the hydrogen discharge amount can be obtained for each tank 13. The control device 70 may notify the abnormality by the notification device 71 by one abnormality determination.

In addition, the control device 70 of the work vehicle 1 of the above embodiment calculates the hydrogen discharge amount based on the detection state of hydrogen detected by the detection devices 81 and 82 and the hydrogen consumption amount consumed in the fuel cell 24, but the discharge amount of methane (methane gas) or the discharge amount of carbon monoxide (CO gas) may be calculated instead of the hydrogen discharge amount, or the consumption amount of methane (methane gas) or the consumption amount of carbon monoxide (CO gas) may be calculated instead of the hydrogen consumption amount. In this case, in a case of obtaining the discharge amount or the consumption amount of methane, "hydrogen" described in the above embodiment may be replaced with "methane", and in a case of obtaining the consumption amount of carbon monoxide (CO gas), "hydrogen" described in the above embodiment may be replaced with "carbon monoxide".

In addition, the reference signs used in Chapter 2 are used only in Chapter 1, and are not related to the reference signs of other chapters.

### REFERENCE SIGNS LIST

- 1: work vehicle
- 13: tank (fuel tank)
- 22: pipe
- 24: fuel cell
- 70: control device
- 71: notification device
- 76: on-off valve
- 77: pressure reducing valve
- 81: pressure sensor (detection device)
- 82: temperature sensor (detection device)

### [Supplementary note]

The configuration disclosed in Chapter 1 is applicable to the invention disclosed in Chapter 2. In addition, the configuration disclosed in Chapter 2 is applicable to the invention disclosed in Chapter 1.

## Claims

1. A work vehicle comprising:
a fuel cell;
a hydrogen tank that stores hydrogen that is a fuel of the fuel cell;
a motor driven by electric power output from the fuel cell; and
a control device capable of acquiring a consumption command, wherein
the fuel cell generates power until a hydrogen amount in the hydrogen tank becomes equal to or less than a predetermined amount in a case where the control device acquires the consumption command.

2. The work vehicle according to claim 1, further comprising
an operation unit that outputs the consumption command to the control device when receiving an operation input via an operation member.

3. The work vehicle according to claim 2, further comprising:
a position detection unit that detects a position of an own vehicle; and
an output device that outputs, to an outside, that an operation input is to be performed to the operation member in a case where a position detected by the position detection unit is determined to be a position of a storage place of the own vehicle.

4. The work vehicle according to claim 2, wherein
processing of outputting the consumption command to the control device is executed, by the operation unit, in a case where the hydrogen amount in the hydrogen tank is equal to or less than a threshold in addition to a reception of the operation input.

5. The work vehicle according to claim 4, wherein
the predetermined amount is a value in which the hydrogen amount is smaller than the threshold.

6. The work vehicle according to claim 1, further comprising
a plan processing unit that executes processing of outputting the consumption command to the control device in a case where contents of a work plan of an own vehicle indicate that the own vehicle is to be brought into a stop state for a certain period of time from a current time point.

7. The work vehicle according to claim 1, further comprising
a power storage device that stores electric power generated by the fuel cell, wherein
the electric power generated by the fuel cell in a case where the consumption command is acquired is stored in the power storage device.

8. The work vehicle according to claim 7, further comprising
an auxiliary power storage device, wherein
when the power storage device is fully charged, the electric power generated by the fuel cell is stored in the auxiliary power storage device.

9. The work vehicle according to claim 7, further comprising
an external output unit that outputs the electric power generated by the fuel cell to an outside, wherein
when the power storage device is fully charged, the electric power generated by the fuel cell is output to an external device connected to the external output unit.
